(19) Europäisches Patentamt
European Patent Office
Office européen des brevets

(11) EP 4 311 641 A2

(12) DEMANDE DE BREVET EUROPEEN

(43) Date de publication:
31.01.2024 Bulletin 2024/05

(21) Numéro de dépôt: 23188687.0

(22) Date de dépôt: 31.07.2023

(51) Classification Internationale des Brevets (IPC):
B28C 1/00 (2006.01)        B28C 3/00 (2006.01)
B28C 7/00 (2006.01)        B28C 7/04 (2006.01)
B28C 9/02 (2006.01)        C04B 33/02 (2006.01)
C04B 33/13 (2006.01)        C04B 28/00 (2006.01)
C04B 40/00 (2006.01)        E04C 1/00 (2006.01)
C04B 14/36 (2006.01)        C04B 28/04 (2006.01)

(52) Classification Coopérative des Brevets (CPC):
(C-Sets disponibles)
B28C 1/006; B28C 3/00; B28C 7/0007;
B28C 7/0418; B28C 9/02; C04B 14/361;
C04B 28/001; C04B 28/006; C04B 28/04;
C04B 33/025; C04B 33/1305; C04B 40/0032;
E04B 2/04; E04C 1/40; C04B 2235/5427;    (Cont.)

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR
Etats d'extension désignés:
BA
Etats de validation désignés:
KH MA MD TN

(30) Priorité: 29.07.2022 FR 2207944

(71) Demandeur: Materrup
40230 Saint-Geours-de-Maremne (FR)

(72) Inventeurs:
• NEUVILLE, Mathieu
  40230 Saint-Geours-de-Maremne (FR)
• MERCÉ, Manuel
  40230 Saint-Geours-de-Maremne (FR)
• KRAMMER-DEVILLARD, Julie
  40990 St PAUL LES DAX (FR)
• MICHEL, Bastien
  40465 Pontonx sur l Adour (FR)

(74) Mandataire: A.P.I. Conseil
Immeuble Newton
4, rue Jules Ferry
64000 Pau (FR)

(54) BRIQUE DE TERRE COMPRESSEE ET PROCEDE DE FABRICATION

(57) L'invention concerne un procédé de fabrication (200) d'une brique de terre compressée (51) comportant une étape de formation (230) d'un liant comportant une matrice argileuse crue (2) et une composition d'activation ; une étape de mélange (240) du liant avec au moins deux terres crues (4) présentant des profils granulométriques respectivement différents, de préférence au moins une des deux terres crues (4) étant une terre crue (4) broyée ; une étape de mise en forme (250) d'une brique en terre compressée (51) à partir du mélange. En outre, la présente invention propose un système (1) de fabrication d'une brique de terre compressée (51) comportant un premier dispositif de modification de distribution de taille de particules agencé pour recevoir une terre crue (4) ; un deuxième dispositif de modification de distribution de taille de particules agencé pour recevoir une partie de la terre crue (4) ; un organe de mélange (50)

FIG. 2

(Cont. page suivante)

(52) Classification Coopérative des Brevets (CPC):
(Cont.)
C04B 2235/96

C-Sets
**C04B 28/001, C04B 12/04, C04B 14/106,
C04B 18/08, C04B 18/101, C04B 18/141,
C04B 18/146, C04B 20/008, C04B 22/062,
C04B 40/0259, C04B 2103/0081;
C04B 28/006, C04B 12/04, C04B 14/106,
C04B 14/361, C04B 18/08, C04B 18/101,
C04B 18/141, C04B 18/146, C04B 20/008,
C04B 22/062, C04B 40/0259, C04B 2103/0081;
C04B 28/04, C04B 14/106, C04B 14/361,
C04B 18/08, C04B 18/101, C04B 18/141,
C04B 18/146, C04B 20/008, C04B 22/064,
C04B 22/10, C04B 24/16, C04B 24/32,
C04B 40/0259**

**Description**

**Domaine technique**

L'invention concerne le domaine de la construction et plus particulièrement celui d'éléments de maçonnerie pouvant être utilisés en construction. En particulier, elle concerne un procédé de fabrication d'une brique de terre compressée. En outre, l'invention concerne la brique de terre compressée selon l'invention et un système de fabrication adapté.

**Technique antérieure**

La terre crue est un matériau utilisé depuis plusieurs millénaires et est aujourd'hui utilisée dans plus de 150 pays. Matière disponible abondamment et facilement accessible sur l'ensemble de la planète, son utilisation sous la forme de brique de terre compressée peut être très vertueuse sur le plan environnemental.

Néanmoins, dans les pays les plus développés, le béton, malgré son empreinte environnementale conséquente, reste prédominant par rapport aux briques en terre compressée.

La brique de terre compressée (BTC) est, comme son nom l'indique, une brique de terre ayant subi une compression. La terre présente dans cette brique est composée généralement de gravillons, sable, argiles et limons. Les BTC présentent de nombreux avantages. Dans le cadre d'un aménagement intérieur, un mur en BTC présente des propriétés rafraichissantes et permet de prévenir le développement des moisissures. La BTC présente également des propriétés acoustiques intéressantes : elle permet une réverbération des sons et ainsi d'obtenir une pièce calme. Cet atout est déjà utilisé pour la construction de salles de musique ou de grandes pièces nécessitant une bonne acoustique. Enfin, une cloison en BTC peut atténuer les champs électromagnétiques et permet une inertie thermique due à une conductivité thermique élevée.

Les BTC peuvent faire ou non l'objet d'une cuisson. Les BTC cuites présentent des résistances mécaniques généralement supérieures mais un bilan carbone dégradé. En effet, il y a émission de $CO_2$ lors du processus de cuisson des briques. Ainsi, les briques non cuites sont maintenant privilégiées car elles ont besoin de moins d'énergie que les briques cuites (émission de $CO_2$ dans l'atmosphère inférieure de 80 % à celle des briques cuites).

Toutefois, les BTC crues ou non cuites présentent pour la plupart des résistances mécaniques dégradées par rapport aux BTC cuites. Pour palier cela, les BTC sont stabilisées avec un liant hydraulique, généralement du ciment Portland. Le ciment Portland est composé majoritairement de clinker, qui résulte de la calcination d'un mélange de 80% de calcaire et 20% d'argile, chauffé à une température d'environ 1450°C. La teneur de ce liant hydraulique est généralement comprise entre 5 et 20 % en masse, selon les besoins techniques. Pour comparaison, le ciment Portland représente en moyenne 15% en masse du béton.

Les liants hydrauliques ont intrinsèquement un impact sur l'environnement de par leur production très énergivore mais aussi du rejet de $CO_2$ lors de la fabrication. Au cours des dernières décennies, des recherches importantes ont été consacrées au développement de BTC stabilisées ayant des teneurs réduites en ciment Portland en tant qu'alternative plus abordable et écologique à d'autres éléments de construction plus courants.

En particulier, il a été montré (Kumar et al 2022, Effects of sugarcane bagasse fibers on the properties of compressed and stabilized earth blocks. Construction and Building Materials 315 (2022) 125552) que l'inclusion de 0,5% à 1,0% en poids de fibres végétales dans les BTC stabilisés à 12% en poids de ciment peut améliorer considérablement les propriétés mécaniques des BTC stabilisées sans compromettre leurs propriétés de durabilité. Toutefois, la teneur en ciment est ici presque égale à la teneur en ciment dans des bétons classiques (12% vs environ 15%).

Il a été proposé de combiner la terre crue avec des déchets plastiques (Akinwumi et al 2019. Marine plastic pollution and affordable housing challenge: Shredded waste plastic stabilized soil for producing compressed earth bricks. Case Studies in Construction Materials 11 (2019) e00241). Toutefois, ces BTC, fabriquées avec un mélange de terre et des pourcentages variables (0, 1, 3 et 7 %) de déchets plastiques broyés, ont présenté des valeurs de résistances à la compréhension bien inférieure à 4 MPa.

Il a été montré que la résistance mécanique de BTC pouvait être améliorée par le remplacement d'une partie du ciment Portland par de la chaux. Cela en particulier lors de l'utilisation d'une terre présentant des teneurs réduites en argile et en limon (Malkanthi et al 2020. Lime stabilization for compressed stabilized earth blocks with reduced clay and silt. Case Studies in Construction Materials 12 (2020) e00326). Les auteurs ont en particulier montré que des résistances mécaniques supérieures ou égales à 4 MPa pouvaient être atteintes à partir de 5 % de ciment Portland combiné à 5 % de chaux, en poids sec par rapport au mélange pour BTC. Toutefois, l'utilisation de chaux en remplacement d'une partie du ciment Portland a été souvent indiquée comme allongeant les durées de séchage. En outre, à des teneurs inférieurs à 5 % de ciment Portland dans le mélange avec la terre crue, les résistances mécaniques sont décevantes.

Les BTC ont été considérées comme une unité de maçonnerie clé au cours des dernières décennies. De nombreuses études ont montré que la résistance à la compression diminue avec l'augmentation de la teneur en argile et en limon. La majorité des chercheurs s'intéressent à une teneur en argile et en limon dans la terre crue allant jusqu'à 15 %. Une étude visant à déterminer l'influence de la teneur en argile et en limon dans la terre crue a montré que pour des teneurs en fines de 15 % ou plus il faut plus de 8 % de ciment pour atteindre une résistance mécanique de 4 MPa ou plus tandis que pour une terre crue de 10 % ou moins de fines, il faut plus de 6 % de ciment Portland (Malkanthi et al 2021. Use of construction waste to modify soil grading for compressed stabilized earth blocks (CSEB) production. Case Studies in Construction Materials 15 (2021) e00717). Ainsi, lors de l'utilisation d'une teneur élevée en argile et en limon, seuls des pourcentages de ciment élevés permettent d'atteindre les exigences de résistance minimales.

Il a été proposé d'utiliser une composition de mâchefer en combinaison avec du ciment Portland et de la chaux pour former des briques de terre compressée. Néanmoins, les mélanges simultanés de ces composants ont généralement permis d'atteindre des résistances inférieures à la valeur (4 MPa) préconisée par CRATerre pour la brique de terre comprimée (Lawane el al 2019. Mechanical and physical properties of stabilised compressed coal bottom ash blocks with inclusion of lateritic soils in Niger. Scientific African. Volume 6, November 2019, e00198). En, outre il a été confirmé qu'en présence de mâchefer, la substitution de ciment Portland par de la chaux entraine une dégradation des performances. Finalement, les briques produites avec 8,5 % de ciment, 17,1 % de sols latéritiques et le complément de mâchefer ont atteint la résistance cible après 90 jours de cure. Il a aussi été proposé de stabiliser une terre crue à partir de laitiers de hauts fourneaux en combinaison avec de la chaux ou du ciment Portland (Oti et al 2009). Des briques de terre compressée présentant des résistances mécaniques acceptables ont été obtenues mais cela après des durées de séchages très importantes (e.g. supérieures à 40 jours).

Ainsi, les plastiques, les fibres végétales, le mâchefer, les laitiers de hauts fourneaux, la chaux, etc. ont été proposés pour remplacer au moins en partie le ciment Portland dans les BTC. Toutefois, les BTC obtenues présentaient soit des résistances mécaniques à la compression inférieures à 4MPa soit elles nécessitaient des durées de cure bien trop longues.

Ainsi, il existe un besoin pour de nouvelles solutions permettant de réduire encore l'empreinte carbone de la formation de BTC à résistance mécanique élevée tout en augmentant la vitesse de production.

**Résumé de l'invention**

L'invention vise à pallier ces inconvénients. Ce qui suit présente un résumé simplifié d'aspects, de modes de réalisation et d'exemples sélectionnés de la présente invention dans le but de fournir une compréhension de base de l'invention. Toutefois, le résumé de l'invention ne constitue pas un aperçu exhaustif de tous les aspects, modes de réalisation et exemples de l'invention. Le seul but du résumé est de présenter des aspects, des modes de réalisation et des exemples sélectionnés de l'invention sous une forme concise en guise d'introduction à la description plus détaillée des aspects, des modes de réalisation et des exemples de l'invention qui suivent le résumé.

L'invention concerne en particulier un procédé de fabrication d'une brique de terre compressée, ledit procédé comportant les étapes suivantes :

- Formation d'un liant comportant :

  ◦ une matrice argileuse crue, et
  ◦ une composition d'activation ;

- Mélange du liant avec au moins deux terres crues présentant des profils granulométriques respectivement différents, de préférence au moins une des deux terres crues étant une terre crue broyée ; et
- Mise en forme d'une brique en terre compressée à partir du mélange.

La demanderesse a développé un nouveau procédé de fabrication de brique de terre compressée permettant d'obtenir des briques présentant une très faible empreinte carbone, une résistance mécanique élevée et un temps de cure réduit. Classiquement, la préparation de brique de terre compressée nécessite l'utilisation de ciment Portland ou de mâchefer à des teneurs supérieures à 5 %. Avec la présente solution, le transport de matière sur le territoire et l'empreinte environnementale globale sont réduits de manière significative grâce notamment à un procédé de mélange en deux étapes (i.e. formation d'un liant puis mélange du liant et de la terre crue) et l'utilisation de combinaisons de constituants spécifiques. En outre, alors que des concentrations en argile crue de moins de 15% étaient recommandées lors de la stabilisation des briques de terre compressées au ciment Portland, les inventeurs ont développé une solution permettant de combiner argile crue et ciment Portland pour des briques séchant rapidement avec des résistances mécaniques répondant aux critères du CRATerre.

Selon d'autres caractéristiques optionnelles du procédé de fabrication selon l'invention, il peut inclure facultativement une ou plusieurs des caractéristiques suivantes, seules ou en combinaison :

- au moins une des deux terres crues utilisées lors de l'étape de mélange est une terre crue non broyée. Lors de l'étape de broyage, de préférence deux terres crues broyées sont utilisées.
- au moins une des deux terres crues est une terre crue broyée et la terre crue broyée utilisée lors de l'étape de mélange la terre crue broyée utilisé lors de l'étape de mélange présente une D50 inférieure 500 µm, la D50 étant de préférence mesurée selon la norme ASTM D6913-04(2009). Eventuellement, la D50 peut être mesurée selon les indications de la norme ASTM D6913-04(2009) couplées aux indications de la norme ISO 13320:2020 par exemple pour les particules fines (e.g. <65 µm).
- au moins une des terres crues utilisées lors de l'étape de mélange présente une D50 supérieure 500 µm, la D50 étant de préférence mesurée selon la norme ASTM D6913-04(2009).
- la composition d'activation est une composition alcaline comportant un ou plusieurs composés présentant un pKa supérieur ou égal à 10.
- lors de l'étape de mélange, le mélange comporte 5% ou moins en poids sec de ciment, en particulier de ciment Portland.
- lors de l'étape de formation du liant, la proportion massique en poids sec de matrice argileuse crue dans le liant est d'au moins 30% en poids sec.
- lors de l'étape de formation du liant, la matrice argileuse crue ajoutée présente une D50 inférieure à 400 µm, la D50 étant de préférence mesurée selon la norme ASTM D6913-04(2009). De préférence, la matrice argileuse crue ajoutée présente une D50 inférieure à 200 µm, la D50 étant de préférence mesurée selon la norme ASTM D6913-04(2009) en combinaison avec la norme ISO 13320:2020.
- lors de l'étape de formation du liant, la proportion massique en poids sec de composition d'activation dans le liant est d'au plus 40%.
- l'étape de formation du liant comporte en outre l'ajout d'une composition d'oxydes métalliques calcinée, de préférence la proportion massique en poids sec de composition d'oxydes métalliques calcinée dans le liant est d'au plus 40%.
- l'étape de formation du liant comporte en outre l'ajout d'un défloculant, de préférence la proportion massique en poids sec de défloculant dans le liant est d'au moins 0,01%.
- lors de l'étape de formation du liant, la proportion massique en poids sec d'argile crue dans le liant est d'au moins 5% en poids sec. De préférence, la proportion massique en poids sec d'argile crue dans le liant est d'au moins 10% en poids sec, de façon plus préférée d'au moins 12% en poids sec, de façon encore plus préférée d'au moins 14% en poids sec.
- lors de l'étape de mélange du liant avec les terres crues, le liant représente au moins 3% en poids sec du mélange.
- il comporte une étape de réalisation d'une cure de la brique de terre compressée. De préférence, la cure peut être une cure en atmosphère humide, par exemple à une humidité relative de 95 % ou plus, de préférence de 98% ou plus. La cure peut être réalisée pendant au moins deux jours, de préférence au moins quatre jours.
- la cure est faite sur une durée d'au plus 15 jours, de préférence d'au plus 10 jours.
- la cure est faite de façon à obtenir une brique de terre compressée présentant une résistance à la compression supérieure ou égale à 4 MPa, selon la norme NF EN 771-3+A1/CN. Par exemple, le procédé peut comporter une étape de mesure de la résistance à la compression en fonction du temps de cure de façon à déterminer la durée de la cure à réaliser.
- il comporte une étape d'acquisition d'une valeur d'au moins une propriété granulométrique de la matrice argileuse crue et des terres crues et en ce que l'étape de mélange du liant avec les terres crues comporte un ajout de quantités calculées de terres crues, les quantités calculées de terres crues étant calculées par un ou plusieurs processeurs en fonction des valeurs d'au moins une propriété granulométrique préalablement acquises.

**Selon un autre objet**, l'invention porte en outre sur une **brique de terre compressée** susceptible d'être fabriquée par le procédé de fabrication selon l'invention. En particulier, l'invention porte en outre sur une brique de terre compressée directement fabriquée par le procédé de fabrication selon l'invention.

Selon d'autres caractéristiques optionnelles la brique de terre compressée selon l'invention, peut inclure facultativement une ou plusieurs des caractéristiques suivantes, seules ou en combinaison :

- elle comporte au moins 5 % en poids sec d'argile crue et entre 0,5 et 4 % en poids sec de ciment, de préférence de ciment Portland.
- elle comporte en outre un agent de défloculation.
- elle comporte en outre au moins 2 % en poids sec d'oxydes métalliques, de préférence au moins 5 % en poids sec d'oxydes métalliques.
- elle comporte au moins deux terres crues dont au moins une des deux terres crues est une terre crue broyée qui présente une D50 inférieure à 500 µm, la D50 étant de préférence mesurée selon la norme ATSM D6913-04(2009).
- elle comporte au moins deux terres crues dont au moins une des terres crues présente une D50 supérieure à 500 µm, la D50 étant de préférence mesurée selon la norme ASTM D6913-04(2009).

- elle comprend une composition d'activation qui est une composition alcaline comportant un ou plusieurs composés présentant un pKa supérieur ou égal à 10.
- elle comporte 5% ou moins en poids sec de ciment, en particulier de ciment Portland.
- elle comporte un liant dont la proportion massique en poids sec de matrice argileuse crue est d'au moins 30% en poids sec.
- elle comporte un défloculant, de préférence la proportion massique en poids sec de défloculant est d'au moins 0,01% en poids de liant.
- le liant représente au moins 3% en poids sec de la brique de terre compressée.
- la brique de terre compressée a subi une étape de cure sur une durée d'au plus 15 jours, de préférence d'au plus 10 jours.

**Selon un autre objet**, l'invention porte en outre sur **système de fabrication d'une brique de terre compressée** comportant :

- Un premier dispositif de modification de distribution de taille de particules agencé pour recevoir une terre crue présentant un premier profil de distribution de taille de particules et pour la traiter de façon à ce que la terre crue traitée présente un deuxième profil de distribution de taille de particules ; par exemple le premier dispositif de modification de distribution de taille de particules étant un démotteur, broyeur, émotteur, ou un granulateur ;
- Un deuxième dispositif de modification de distribution de taille de particules agencé pour recevoir une partie de la terre crue présentant le deuxième profil de distribution de taille de particules, de préférence seulement une partie de la terre crue présentant le deuxième profil de distribution de taille de particules, et pour la traiter de façon à ce que la terre crue traitée présente un troisième profil de distribution de taille de particules ; par exemple le deuxième dispositif de modification de distribution de taille de particules étant un broyeur à marteaux, broyeur à boulets ou un broyeur à barres ; et
- Un organe de mélange, en particulier un malaxeur, configuré pour mélanger les terres crues présentant les deuxième et troisième profils de distribution de taille de particules avec un liant comportant une matrice argileuse crue et une composition d'activation.

Un tel système de fabrication permet de tirer avantage de la combinaison de terres crues présentant différents profils granulométriques. Dans le domaine de la construction il est évidement connu de préparer des granulats pour former des matériaux de construction. L'invention porte ici sur un système de fabrication agencé pour préparer des terres crues présentant différents profils granulométriques en particulier et permettant de mélanger ces terres crues différentes avec un liant comportant une matrice argileuse crue et une composition d'activation.

Selon d'autres caractéristiques optionnelles du système de fabrication d'une brique de terre compressée selon l'invention, il peut inclure facultativement une ou plusieurs des caractéristiques suivantes, seules ou en combinaison :

- il comporte en outre un ou plusieurs transporteurs configurés pour transporter la terre crue présentant le deuxième profil de distribution de taille de particules et la terre crue présentant le troisième profil de distribution de taille de particules, jusqu'à l'organe de mélange.
- les un ou plusieurs transporteurs comporte un chemin de dérivation positionné après le premier dispositif de modification de distribution de taille de particules et configuré pour envoyer, directement ou indirectement (e.g. zone de stockage), une partie de la terre crue présentant le deuxième profil de distribution de taille de particules vers l'organe de mélange et une autre partie de la terre crue présentant le deuxième profil de distribution de taille de particules vers le deuxième dispositif de modification de distribution de taille de particules.
- il comporte en outre un troisième dispositif de modification de distribution de taille de particules agencé pour recevoir une partie de la terre crue présentant le troisième profil de distribution de taille de particules et pour la traiter de façon à ce que la terre crue traitée présente un quatrième profil de distribution de taille de particules ; les un ou plusieurs transporteurs étant configurés pour transporter la terre crue présentant le quatrième profil de distribution de taille de particules jusqu'à un organe de mélange configuré pour mélanger la terre crue présentant le quatrième profil de distribution de taille de particules avec une composition d'activation. Cela permet au système de fonctionner en autonomie au niveau de la fourniture d'une grande partie de la matière utilisée pour former la BTC. En outre, cela induit que le mélangeur est également configuré pour préparer le liant.
- le deuxième dispositif de modification de distribution de taille de particules est en outre agencé pour recevoir une partie de la terre crue présentant le deuxième profil de distribution de taille de particules ou de la terre crue présentant le troisième profil de distribution de taille de particules et pour la traiter de façon à ce que la terre crue traitée présente un quatrième profil de distribution de taille de particules ; les un ou plusieurs transporteurs étant configuré pour transporter la terre crue présentant le quatrième profil de distribution de taille de particules jusqu'à un organe de mélange configuré pour mélanger la terre crue présentant le quatrième profil de distribution de taille de particules avec une composition d'activation. Cela permet au système de fonctionner en autonomie au niveau de la fourniture d'une grande partie de la matière utilisée pour former la BTC sans nécessiter trois dispositifs de modification de distribution de taille de particules différents. En outre, cela induit que le mélangeur est également configuré pour préparer le liant.

- il comporte des moyens de mesure de caractéristiques des terres crues, en particulier des terres crues présentant les deuxième, et troisième profils de distribution de taille de particules et en ce que les un ou plusieurs transporteurs sont configurés pour transporter la terre crue présentant le deuxième profil de distribution de taille de particules et la terre crue présentant un troisième profil de distribution de taille de particules jusqu'à l'organe de mélange en fonction de valeurs de caractéristiques des terres crues. Cela permet d'améliorer les performances des BTC produites. Les caractéristiques des terres crues peuvent par exemple se référer au profil granulométrique, en particulier D10, D50 et/ou D90.

- le premier dispositif de modification de distribution de taille de particules est configuré de façon à ce que la terre crue traitée présente une D50 supérieure à 500 $\mu$m, de préférence supérieure ou égale à 750 $\mu$m, de façon plus préférée supérieure ou égale à 1 mm, de façon encore plus préférée supérieure ou égale à 1,5 mm, de préférence la D50 étant mesurée selon les indications de la norme ASTM D6913-04(2009).

- le deuxième dispositif de modification de distribution de taille de particules est configuré de façon à ce que la terre crue traitée présente une D50 inférieure à 500 $\mu$m, de préférence une D50 inférieure à 200 $\mu$m, de préférence inférieure ou égale à 150 $\mu$m, de façon plus préférée inférieure ou égale à 100 $\mu$m, de façon encore plus préférée inférieure ou égale à 80 $\mu$m, de préférence la D50 étant mesurée selon les indications de la norme ASTM D6913-04(2009) en combinaison avec la norme ISO 13320:2020.

- le troisième dispositif de modification de distribution de taille de particules est configuré de façon à ce que la terre crue traitée présente une D50 inférieure ou égale à 100 $\mu$m, de façon préférée inférieure ou égale à 50 $\mu$m, de façon plus préférée inférieure ou égale à 40 $\mu$m, de façon encore plus préférée une D50 inférieure ou égale à 30 $\mu$m, de préférence la D50 étant mesurée selon les indications de la norme ASTM D6913-04(2009) en combinaison avec la norme ISO 13320:2020. En particulier, la terre crue traitée issue du troisième dispositif de modification de distribution de taille de particules présente une D50 inférieure à la D50 de la terre crue traitée issue du deuxième dispositif de modification de distribution de taille de particules.

**Brève description des dessins**

D'autres caractéristiques et avantages de l'invention seront mieux compris à la lecture de la description qui va suivre et en référence aux dessins annexés, donnés à titre illustratif et nullement limitatif.

[Fig. 1] représente une illustration schématique d'un procédé de fabrication selon un mode de réalisation de la présente invention. Les étapes encadrées en pointillé sont facultatives.

[Fig. 2] représente une illustration schématique d'une étape de mise en forme de brique de terre compressée selon un mode de réalisation de la présente invention.

[Fig. 3] représente une illustration schématique d'une répartition granulaire de deux fractions de terre crue l'une étant broyée grossièrement (A) et l'autre broyée finement (B) et d'un mélange de terre crue (C).

[Fig. 4] représente une illustration schématique d'un système de fabrication de brique de terre compressée selon un mode de réalisation de la présente invention.

Les figures ne respectent pas nécessairement les échelles, notamment en épaisseur, et ce à des fins d'illustration.

Des aspects de la présente invention sont décrits en référence à des organigrammes et/ou à des schémas fonctionnels de procédés, d'appareils (systèmes) et de produits de programme d'ordinateur selon des modes de réalisation de l'invention.

Sur les figures, les organigrammes et les schémas fonctionnels illustrent l'architecture, la fonctionnalité et le fonctionnement d'implémentations possibles de systèmes, de procédés et de produits de programme d'ordinateur selon divers modes de réalisation de la présente invention. À cet égard, chaque bloc dans les organigrammes ou blocs-diagrammes peut représenter un système, un dispositif, un module ou un code, qui comprend une ou plusieurs instructions exécutables pour mettre en oeuvre la ou les fonctions logiques spécifiées. Dans certaines implémentations, les fonctions associées aux blocs peuvent apparaitre dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et/ou de l'organigramme, et des combinaisons de blocs dans les schémas de principe et/ou l'organigramme, peuvent être mis en oeuvre par des systèmes matériels spéciaux qui exécutent les fonctions ou actes spécifiés ou effectuer des combinaisons de matériel spécial et d'instructions informatiques.

## Description des modes de réalisation

Ci-après, nous décrivons un résumé de l'invention et le vocabulaire associé, avant de présenter les inconvénients de l'art antérieur, puis enfin de montrer plus en détail comment l'invention y remédie.

Dans la suite de la description, l'expression « brique de terre compressée » ou le terme BTC peut correspondre à un matériau de construction fabriqué à partir d'un mélange comportant un liant et une terre crue. Le mélange aura subi une étape de compression visant à la mettre en forme. De préférence, la BTC n'aura pas subi d'étape de combustion.

Dans la suite de la description, l'expression « terre crue » peut correspondre à un matériau minéral granulaire par exemple issu de roche sédimentaire ou de dépôts sédimentaires. La terre crue présente différentes appellations en fonction de sa composition ou encore de ses origines. La terre crue pourra par exemple correspondre à des sols argileux, argilo-sableux, argilo-limoneux, limono-argileux, limono-argileux fin, limono-argilo-sableux, limoneux, limoneux fin argileux, limoneux fin, limoneux très fin, limono-sableux, sablo-limoneux, et sableux. La terre crue peut correspondre aussi à des stériles (de découverte ou de production), des argiles de découverture, une terre excavée, comme une terre argileuse excavée, à des sables argileux de stations d'épuration, des boues ou encore des sédiments.

Le terme « liant » ou « liant pour brique de terre compressée » au sens de l'invention peut être compris comme une formulation permettant d'assurer l'agglomération de matériaux entre eux, notamment lors de la prise, puis du durcissement d'un matériau de construction. Ainsi, il permet en particulier d'assurer l'agglomération du sable et autres constituants de la terre crue avec les constituants du liant. Le liant selon l'invention est en particulier un liant hydraulique, c'est-à-dire que le durcissement se fait au contact de l'eau.

L'expression « matrice argileuse », au sens de l'invention peut correspondre à un ou plusieurs matériaux rocheux à base de silicates hydratés ou d'aluminosilicates de structure lamellaire, ladite matrice argileuse étant composée de particules fines provenant en général de l'altération de silicates à charpente tridimensionnelle, tels que les feldspaths. Une matrice argileuse peut ainsi comporter un mélange de tels matériaux rocheux pouvant par exemple consister en de la kaolinite, de l'illite, de la smectite, de la bentonite, de la chlorite, de la vermiculite, ou leurs mélanges. En outre, une matrice argileuse peut comporter des limons.

Au sens de l'invention, l'expression « matrice argileuse crue », pourra correspondre à une matrice argileuse n'ayant pas subi d'étape de calcination. Par exemple, cela correspond à une matrice argileuse n'ayant pas subi une montée en température supérieure à 300°C, de préférence supérieure à 200°C et plus préférentiellement une température supérieure à 150°C. En effet, la matrice argileuse crue peut subir une étape de séchage par chauffage nécessitant une montée en température généralement sensiblement égale ou inférieure à 150°C mais pas d'étape de calcination. Une matrice argileuse crue peut de préférence comporter un mélange de matériaux rocheux pouvant par exemple comporter de la kaolinite, de l'illite, de la smectite, micas tels que la muscovite, de la bentonite, de la chlorite, de la vermiculite, ou leurs mélanges, ainsi que des limons.

Au sens de l'invention, un « agent défloculant », « défloculant » ou « agent de défloculation », peut correspondre à un composé capable de dissocier des agrégats et des colloïdes notamment en suspension aqueuse. Des agents défloculant ont par exemple été utilisés dans un contexte de forage ou d'extraction pétrolière pour rendre l'argile plus fluide et faciliter l'extraction ou le forage.

L'expression « composition d'oxydes métalliques » peut se référer au sens de l'invention à une composition comportant des oxydes métalliques tels que des aluminates. En particulier, la composition d'oxydes métalliques comporte plus de 25 % en poids d'oxydes métalliques, de préférence plus de 30 % en poids d'oxydes métalliques, de façon plus préférée plus de 40 % en poids d'oxydes métalliques et de façon encore plus préférée plus de 45 % en poids d'oxydes métalliques. Par exemple, la composition d'oxydes métalliques comporte plus de 2 % en poids d'aluminate, de préférence plus de 5 % en poids d'aluminate, de façon plus préférée plus de 7% en poids d'aluminate et de façon encore plus préférée plus de 10 % en poids d'aluminate. En outre, les oxydes métalliques peuvent correspondre à, ou comporter, des oxydes d'alcalinoterreux. Par exemple, la composition d'oxydes métalliques peut comporter plus de 10 % en poids d'oxyde de calcium, de préférence plus 20 % en poids d'oxyde de calcium, de façon plus préférée plus 25 % en poids d'oxyde de calcium et de façon encore plus préférée plus de 30 % en poids sec d'oxyde de calcium. La composition d'oxydes métalliques peut comporter des espèces chimiques n'étant pas des oxydes métalliques. Par exemple, la composition d'oxydes métalliques peut comporter des oxydes de métalloïdes avec par exemple plus de 10 % en poids d'oxyde de métalloïdes, de préférence plus 20 % en poids d'oxyde de métalloïdes, de façon plus préférée plus 25 % en poids d'oxyde de métalloïdes et de façon encore plus préférée plus de 30 % en poids d'oxyde de métalloïdes. Ces concentrations massiques peuvent être aisément mesurées par l'homme du métier utilisant les techniques classiques de dosage des oxydes métalliques ou des oxydes de métalloïdes. La personne du métier pourra par exemple utiliser la fluorescence X notamment selon les indications des normes NF EN 196-2 et NF EN 15309. En particulier, l'expression « composition d'oxydes métalliques » se réfère à une composition comportant plus de 50%, de préférence plus de 70%, de façon plus préférée plus de 80% et de façon encore plus préférée plus de 90% d'oxydes métalliques et/ou d'oxydes de métalloïdes, dont des aluminates. De préférence, une composition d'oxydes métalliques correspondra à un laitier issu de la métallurgie, tel qu'un laitier de hauts fourneaux ou encore à des cendres volantes. Comme cela sera détaillé par la suite, la « composition d'oxydes métalliques » est de préférence une composition d'oxydes métalliques calcinée. C'est-à-dire qu'elle a subi une étape à haute température. Cette étape à haute température peut être naturelle ou artificielle, dans ce cas, il s'agit d'un traitement à haute température. L'étape à haute température peut par exemple correspondre à un traitement à une température supérieure ou égale à 500°C, de préférence supérieure ou égale à 750°C et de façon plus préférée supérieure ou égale à 900°C ; et de façon encore plus préférée supérieure à 1000°C.

L'expression « ciment Portland » correspond à un liant hydraulique composé principalement de silicates de calcium hydraulique dont la prise et le durcissement est rendue possible par une réaction chimique avec de l'eau. Le ciment Portland contient généralement au moins 95% de clinker et au maximum 5% de constituants secondaires tels que des alcalis ($Na_2O$, $K_2O$), de la magnésie ($MgO$), du gypse ($CaSO_4 \cdot 2\,H_2O$) ou encore diverses traces de métaux. Par exemple, le ciment Portland peut se rapporter au CEM I.

Le terme « clinker » peut se rapporter à un constituant du ciment et provient de la cuisson d'un mélange composé de sensiblement 80 % de calcaire et 20 % d'aluminosilicates (tels que des argiles). Cette cuisson, la clinkérisation, se fait généralement à une température de plus de 1200°C, particulièrement énergivore et générant de fortes émissions de gaz à effet de serre. Le clinker est généralement moulu puis il peut être mélangé avec des laitiers de hauts-fourneaux afin de produire des ciments composés.

L'expression « terre argileuse excavée » correspond au sens de l'invention à une terre argileuse obtenue suite à une étape où le sol a été creusé par exemple au cours d'opérations de régalements et/ou de terrassements, en vue de construire, bâtir ou remblayer. En particulier, au sens de l'invention, la terre argileuse excavée peut être ou non déplacée hors du site d'excavation. De façon préférée et selon un avantage de l'invention, la terre excavée est utilisée sur le site d'excavation ou à une distance inférieure à 500 km, de préférence inférieure à 200 km, de façon plus préférée inférieure à 50 km. Ainsi, le procédé selon l'invention peut comporter une étape de prélèvement de terre crue et de transport de terre crue sur une distance inférieure à 500 km avant son utilisation dans le procédé. En outre, avantageusement, la terre argileuse excavée dans le cadre de l'invention est une terre argileuse excavée crue, c'est-à-dire qu'elle n'a pas subi d'étape de calcination. En particulier, c'est-à-dire qu'elle n'a fait l'objet d'aucun traitement thermique préalable. Par exemple, cela correspond à une terre argileuse n'ayant pas subi une montée en température supérieure à 300°C, de préférence supérieure à 200°C et plus préférentiellement une température supérieure à 150°C. En effet, la terre argileuse crue peut subir une étape de séchage nécessitant une montée en température généralement sensiblement égale à 150°C mais pas d'étape de calcination. Une étape de calcination pourra par exemple correspondre à un traitement thermique à plus de 600°C pendant plusieurs secondes. Une terre argileuse excavée peut présenter différents profils granulométriques. Dans le cadre de l'invention, une terre argileuse excavée pourra comporter des particules de taille supérieure à 2 μm, de préférence supérieure à 20 μm, de préférence supérieure à 50 μm et par exemple supérieure à 75 μm telle que déterminée selon la norme ASTM D422-63 ou la norme ASTM D6913-04(2009). De préférence, la terre argileuse excavée ne comporte pas de granulat de taille supérieure à 2 cm telle que déterminée selon la norme NF EN 933-1, de préférence pas de granulats de taille supérieure à 0,5 cm.

Le terme « sable » peut se rapporter à des particules, provenant de la désagrégation de roches, dont la dimension est comprise entre 0,063 mm et 2 mm.

Le terme « limon » peut se rapporter à des particules dont la taille des grains est intermédiaire entre les argiles et les sables (entre environ 2 et 50 micromètres).

Le terme « D50 » correspond au diamètre médian pour lequel 50% (en volume ou en masse, de préférence en masse) des grains, particules, granulats ou sédiments ont une taille inférieure à un diamètre donné. À titre d'exemple, une méthode d'analyse par tamisage et par sédimentométrie indique une D50 = 5,8 mm, alors 50 % des particules de l'échantillon (en volume ou en masse, de préférence en masse) sont supérieures à 5,8 mm. D50 est généralement utilisé pour représenter la taille des particules d'un groupe de particules. La D50 est de préférence mesurée selon la norme ASTM D422-63 ou selon la norme ASTM D6913-04(2009) ou notamment pour les particules fines la norme ISO 13320:2020 (e.g. D10 ou <65 μm). Les expressions « propriété granulométrique » ou « profil granulométrique » ou « distribution de taille de particules » pourront correspondre à des valeurs de paramètres relatifs à la distribution de taille de particules, par exemple dans la matrice argileuse crue ou dans les terres crues. Il existe de nombreux de paramètres relatifs à la distribution de taille de particules tel que la D50, D10, D90.

Dans la suite de la description, le terme « % en poids » en lien avec le liant, le mélange, ou bien en lien avec la brique de terre compressée, doit être compris comme étant une proportion par rapport au poids sec. Le poids sec correspond au poids avant l'addition d'eau par exemple nécessaire à la formation de la brique de terre compressée. Lorsque les valeurs de % en poids sont données sous la forme d'intervalles, les bornes sont comprises.

L'expression « valeur de tampon hydrique » ou « MBV » pour « moisture buffer value » selon une terminologie anglo-saxonne, représente la capacité d'un matériau à échanger de l'humidité avec son environnement. Elle permet d'estimer le comportement hygrothermique dynamique du matériau en question et est utilisée pour déterminer le confort thermique dans le domaine de la construction et plus particulièrement la régulation de l'humidité intérieure d'une pièce ou d'un bâtiment. Par exemple, dans le cadre d'une brique de terre compressée, la MBV sera relative à la brique de terre compressée dans sa globalité. La MBV s'exprime en g/m2.%HR et indique la quantité moyenne d'eau qui est échangée par sorption ou désorption lorsque les surfaces du matériau sont soumises à des variations d'humidité relative (HR) sur un temps donné. La valeur de tampon hydrique peut être mesurée par toute méthode connue par la personne du métier. Par exemple, la personne du métier pourra se référer à la méthode décrite dans « Durability and hygroscopic behaviour of biopolymer stabilised earthen construction materials » Construction and Building Materials 259 (2020). En particulier, les échantillons (briques de terre compressée selon l'invention) pourront être placés dans une enceinte climatique à 23°C et 33% d'humidité relative et sont laissés jusqu'à avoir une masse constante (par exemple une enceinte climatique modèle MHE 612). Dans ces conditions, les échantillons sont équilibrés après 15 jours de stockage. On expose ensuite les échantillons à des cycles d'humidité élevée (75% HR pendant 8h) puis un cycle d'humidité relative basse (33% HR pendant 16h). Les échantillons sont pesés à intervalles réguliers avec une balance de laboratoire précise à 0,01g. Après deux cycles stables, les échantillons sont sortis de l'enceinte climatique.

[MATH 1]

$$MBV = \frac{\Delta m}{S \times \Delta\%RH}$$

où $\Delta m$ est le changement de masse de l'échantillon dû au changement d'humidité relative,
S est la surface d'exposition totale et $\Delta\%$ HR est la différence entre les niveaux d'humidité.

On entend par « traiter », « calculer », « déterminer », « afficher », « transformer », « extraire », « comparer » ou plus largement « opération exécutable », au sens de l'invention, une action effectuée par un dispositif ou un processeur sauf si le contexte indique autrement. À cet égard, les opérations se rapportent à des actions et/ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « application », « logiciel », « code de programme », et « code exécutable » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou toute autre séquence d'instructions conçues pour l'exécution sur un système informatique.

On entend par « processeur », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « dispositif informatique », tout dispositif comprenant une unité de traitement ou un processeur, par exemple sous la forme d'un microcontrôleur coopérant avec une mémoire de données, éventuellement une mémoire programme, lesdites mémoires pouvant être dissociées. L'unité de traitement coopère avec lesdites mémoires au moyen d'un bus de communication interne.

On entend par « couplé », au sens de l'invention, connecté, directement ou indirectement avec un ou plusieurs éléments intermédiaires. Deux éléments peuvent être couplés mécaniquement, électriquement ou liés par un canal de communication.

Le terme « sensiblement égal » au sens de l'invention correspond à une valeur variant de moins de 20 % par rapport à la valeur comparée, de préférence de moins de 10 %, de façon encore plus préférée de moins de 5 %.

Le domaine de la construction se doit d'évoluer pour optimiser sa productivité tout en répondant aux enjeux sociétaux et environnementaux. Les solutions existantes pour la fabrication de brique de terre compressée (BTC) nécessitent l'utilisation de ciment de Portland à des teneurs généralement supérieures à 8 % en poids sec par rapport au poids sec de la BTC pour atteindre des résistances mécaniques attendues. De telles concentrations ont un impact important sur l'empreinte écologique de la brique de terre compressée produite. Toutefois, jusqu'à présent, cette utilisation à concentration élevée a été considérée comme essentielle considérant les faibles performances des briques de terre compressée réalisées avec des substituants de type plastique ou fibres.

Face à ce constat, la demanderesse a développé une nouvelle solution permettant la fabrication de brique de terre compressée avec une utilisation réduite ou supprimée de ciment Portland. Comme cela sera détaillé par la suite, la solution développée repose sur la préparation d'un liant en amont de la réalisation du mélange avec la terre crue, ce liant comportant un mélange d'argile crue et de composition d'activation et peut éventuellement comporter une composition d'oxydes métalliques calcinée et un défloculant. Une telle solution répond en outre aux enjeux de productivité avec un temps de cure réduit.

En outre, comme cela sera détaillé par la suite, les performances des briques de terre compressée produites peuvent être encore améliorées par des prétraitements de la matrice argileuse et/ou de la terre crue utilisée.

Ainsi, selon **un premier aspect**, l'invention porte sur un **procédé de fabrication 200 d'une brique** de **terre compressée 51**. Les briques de terre compressée 51 fabriquées dans le cadre de l'invention sont en particulier des briques de terre compressée 51 crues. Ainsi, de façon préférée, le procédé de fabrication 200 selon l'invention ne comporte pas d'étape de cuisson (e.g. température supérieure à 500°C). En outre, les briques de terre compressées 51 peuvent être considérées comme étant des briques de terre compressées 51 stabilisées.

Le procédé de fabrication 200 d'une brique de terre compressée 51 selon l'invention pourra être mis en oeuvre avec des dispositifs ou systèmes habituellement utilisés pour la fabrication de briques de terre compressées 51. De façon préférée, il pourra être mis en oeuvre au moyen du système 1 de fabrication selon l'invention qui sera décrit plus en détail par la suite.

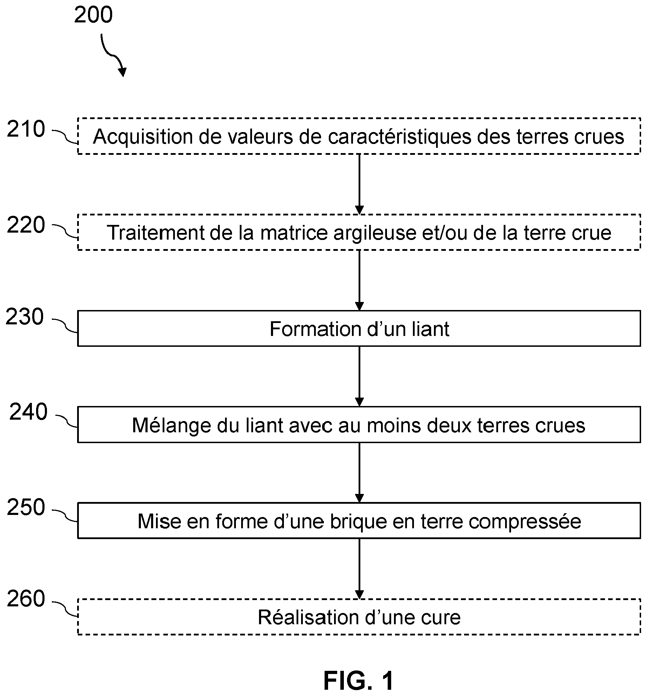

Comme illustré à la **figure 1**, le procédé de fabrication 200 selon l'invention comportera les étapes suivantes : formation 230 d'un liant, mélange 240 du liant avec au moins deux terres crues, et mise en forme 250 d'une brique en terre compressée 51 à partir du mélange.

En outre, le procédé de fabrication 200 pourra comporter des étapes d'acquisition 210 de valeurs de caractéristiques des terres crues, et de traitement 220 de la matrice argileuse et/ou de la terre crue et la réalisation d'une cure 260 de la brique de terre compressée 51.

Le procédé de fabrication 200 selon l'invention peut comporter une **étape d'acquisition 210 de valeurs de caractéristiques des terres crues**, comme des valeurs de quantité de sable et de limon. En particulier, cela peut comporter une mesure de la quantité de sable dans la terre crue. En particulier, cela peut comporter une mesure de la quantité de limon dans la terre crue.

Étant donné que l'invention comporte la préparation d'un liant comportant de l'argile crue et pouvant également comporter du sable et des limons, l'étape d'acquisition 210 permet généralement d'améliorer la performance des briques de terre compressées 51 produites en prenant en compte les caractéristiques des terres crues (e.g. teneurs de sable et de limon mesurées) et éventuellement les caractéristiques de la matrice argileuse crue (e.g. teneurs de sable et de limon mesurées). Cela peut permettre d'augmenter la résistance mécanique de la BTC 51 produite.

En particulier, le procédé fabrication 200 comporte l'étape d'acquisition 210, éventuellement de mesure, de la quantité massique de sable et de limon dans la matrice argileuse crue et dans la terre crue. Comme cela sera détaillé par la suite, cela peut influer sur l'étape de mélange 240 du liant avec la terre crue.

En outre, le procédé fabrication 200 peut comporter une étape de mesure de la quantité massique d'argile dans la matrice argileuse crue et dans la terre crue. Comme cela sera détaillé par la suite, cela pourra influer sur l'étape de mélange 240 du liant avec la terre crue.

L'étape de mesure 210 peut être réalisée par des méthodes classiques d'étude de la distribution particulaire d'un sol (e.g. recommandations CRAterre). Elles peuvent comporter l'utilisation de tamis et de sédimentation (e.g. hygromètre, méthode à la pipette) et être réalisée par exemple en suivant les indications de la norme ASTM D422-63, ASTM D6913-04, ISO 13320:2020, NF X31-107 et éventuellement la norme NF EN 933-1. Cette mesure peut avoir été réalisée au préalable lors de la caractérisation de la matière première. Alternativement ou en complément, la mesure peut être réalisée au niveau du site de production et de préférence en ligne. Par exemple, des capteurs optiques peuvent être utilisés pour analyser la forme et/ou la couleur des matières premières, des granulomètres lasers, des scanners à rayons X peuvent être utilisés pour générer une image radiographique, ou encore de spectromètres peuvent être configurés pour générer des spectres pour différentes longueurs d'ondes tels que des spectres infrarouges, spectres proches infrarouges, spectre de Raman, spectre XPS (spectrométrie photo électronique X), spectre de fluorescence des rayons X classique ou en réflexion totale. Ces mesures pourront par exemple être réalisée sur un bypass de ligne d'approvisionnement ou en amont de la préparation.

Comme illustré à la figure 1, le procédé de fabrication 200 selon l'invention peut comporter une **étape de traitement 220 de la matrice argileuse et/ou de la terre crue**. En particulier, l'étape de traitement 220 de la matrice argileuse et/ou de la terre crue peut comporter une modification des teneurs des différentes fractions granulométriques de la matrice argileuse et/ou de la terre crue.

L'étape de traitement 220 permet généralement de préparer la matière première de façon à ce que les briques de terre compressées 51 présentent une durée de cure réduite et des performances mécaniques améliorées.

Comme cela a été décrit, la matrice argileuse et/ou la terre crue pourront avantageusement avoir été prétraitées.

De préférence, le prétraitement est sélectionné parmi : broyage, triage, tamisage et/ou séchage de la matrice argileuse. De préférence, le prétraitement est sélectionné parmi : broyage, triage, tamisage et/ou séchage de la terre crue. Le prétraitement peut par exemple comporter un fractionnement. Un fractionnement sera avantageusement configuré de façon à ce que les matières impropres à l'utilisation en brique de terre compressée 51 soient extraites. Elles pourront être dirigées vers d'autres filières de valorisation (par exemple une filière de béton).

L'étape de traitement 220 peut être réalisée généralement avec des démotteurs, sécheurs, cribles, et/ou broyeurs.

Le séchage pourra notamment permettre une réduction du taux d'humidité de la matrice argileuse et/ou de la terre crue sans réaliser de montée en température supérieure à 500°C. Le sécheur sera par exemple un sécheur rotatif.

La matrice argileuse et/ou la terre crue séchées pourront avantageusement subir une étape de criblage par exemple au sein d'un crible. Cette étape permettra de préférence d'éliminer les granulats présentant un diamètre supérieur ou égal à 2 cm, de façon plus préférée un diamètre supérieur ou égal à 1 cm. Le crible sera par exemple un crible rotatif.

Le broyage pourra par exemple être réalisé grâce à un broyeur à marteaux, un broyeur à boulets ou encore un broyeur à barres. Comme cela sera détaillé, le broyage peut être réalisé de façon à contrôler la D50 des matières utilisées.

De façon préférée, lors de la formation du liant, la matrice argileuse crue pourra présenter une D50 inférieure ou égale à 200 $\mu$m, de préférence inférieure ou égale à 150 $\mu$m, de façon plus préférée inférieure ou égale à 100 $\mu$m, de façon encore plus préférée inférieure ou égale à 80 $\mu$m.

Comme cela a été mentionné, la terre crue utilisée peut également avantageusement être prétraitée avant d'être utilisée pour la fabrication d'une brique de terre compressée 51. En particulier, la terre crue subit dans le cadre du procédé deux traitements différents visant à produire au moins deux terres crues présentant des profils granulométriques différents (aussi appelé distribution de taille de particules).

En effet, dans le cadre de l'utilisation d'un liant comportant une combinaison d'argile crue et d'une composition d'activation, additionné éventuellement d'une composition d'oxydes métalliques et de défloculant, il est avantageux de disposer de deux terres crues présentant des profils granulométriques différents. En particulier, le traitement préalable d'au moins une terre crue permet donc de générer deux terres crues comportant des dimensions particulaires différentes.

En particulier, l'une des deux terres crues a fait l'objet d'un broyage tandis que l'autre une terre crue n'a pas été broyée. Cela peut être la même terre crue qui grâce à des traitements préalables différents (e.g. broyage contre non-broyage ou broyage fin contre broyage grossier) présentent des profils granulométriques différents (aussi appelé distribution de taille de particules).

Par exemple, une des terres crues utilisées, de préférence une terre crue broyée, présente une D50 inférieure à 500 $\mu$m, de préférence une D50 inférieure à 200 $\mu$m, de préférence inférieure ou égale à 150 $\mu$m, de façon plus préférée inférieure ou égale à 100 $\mu$m, de façon encore plus préférée inférieure ou égale à 80 $\mu$m. En outre, une des terres crues utilisées présente une D50 supérieure à 500 $\mu$m, de préférence supérieure ou égale à 750 $\mu$m, de façon plus préférée supérieure ou égale à 1 mm, de façon encore plus préférée supérieure ou égale à 1,5 mm.

En particulier, une des terres crues utilisées présente une fraction d'argile crue présentant une D50 inférieure à 200 $\mu$m, de préférence inférieure ou égale à 150 $\mu$m, de façon plus préférée inférieure ou égale à 100 $\mu$m, de façon encore plus préférée inférieure ou égale à 80 $\mu$m. En outre, une des terres crues utilisées présente une fraction d'argile crue présentant une D50 supérieure à 500 $\mu$m, de préférence supérieure ou égale à 750 $\mu$m, de façon plus préférée supérieure ou égale à 1 mm, de façon encore plus préférée supérieure ou égale à 1,5 mm.

L'utilisation d'une ou de plusieurs terres crues broyées et à granulométrie contrôlée est importante lors de la fabrication de brique de terre compressée 51.

Un procédé de fabrication 200 selon l'invention comporte une **étape de formation 230 d'un liant** comportant une matrice argileuse crue et une composition d'activation. Il pourra comporter en outre une composition d'oxydes métalliques calcinée et/ou un défloculant. En particulier, cette étape de formation 230 de liant peut être réalisée quelques instants avant l'utilisation du liant et son mélange à de la terre crue. Alternativement, l'étape de formation 230 du liant peut être réalisée bien avant, et le liant ainsi formé conservé à l'état sec pour être mélangé ultérieurement avec une terre crue. De façon préférée, le procédé selon l'invention utilise un liant formé extemporanément. Alternativement, le procédé selon l'invention utilise un liant formé au moins 6 heures, de préférence au moins 24 heures avant son utilisation et par exemple sur un autre site.

Comme cela a été mentionné, dans les techniques habituelles de fabrication de brique en terre compressée 51, lorsqu'une certaine résistance mécanique à la compression est attendue, c'est un ciment Portland qui est utilisé comme liant. Ce ciment Portland est directement mélangé à de la terre crue puis le mélange est utilisé pour former des briques. Dans le cadre de la présente invention, il est nécessaire d'utiliser un liant comportant un mélange de matrice argileuse crue et une composition d'activation. En outre, il pourra également comporter avantageusement une composition d'oxydes métalliques calcinée, et un défloculant.

L'étape de formation 230 du liant peut être réalisée généralement avec un organe de mélange tel un malaxeur ou un mélangeur, par exemple un mélangeur à poudre.

En particulier, comme cela détaillé par la suite, l'étape de formation 230 du liant pourra comporter l'utilisation de trémies, de moyen(s) de pesage, de moyen de dosage volumétrique, de moyens de transport tels que des vis sans fin et/ou des systèmes aérauliques, de mélangeur et/ou de malaxeur.

L'étape formation 230 est généralement réalisée sur une durée suffisante pour créer un mélange intime entre les différents constituants du liant. Les paramétrages pour arriver à un tel résultat pourront varier en fonction des constituants du liant.

L'étape de formation 230 du liant pourra comporter un mélange des constituants du liant pendant au moins 5 secondes avant l'ajout de la terre crue, de préférence pendant au moins 10 secondes avant l'ajout de la terre crue, de façon plus préférée pendant au moins 20 secondes avant l'ajout de la terre crue et de façon encore plus préférée pendant au moins 30 secondes avant l'ajout de la terre crue. Le mélange se fera généralement sur une durée inférieure ou égale à 20 minutes, de préférence pendant au plus 15 minutes avant l'ajout de la terre crue, de façon plus préférée pendant au plus 10 minutes avant l'ajout de la terre crue et de façon encore plus préférée pendant au plus 5 minutes avant l'ajout de la terre crue.

En particulier, l'étape de formation 230 pourra être réalisée en plusieurs sous-étapes. Par exemple, dans un premier temps, le procédé de formation 230 pourra comporter un pré-mélange d'une matrice argileuse crue et d'une composition d'activation, de préférence une composition d'activation alcaline. En outre, lors de ce pré-mélange, le procédé selon l'invention pourra avantageusement comporter l'ajout d'une composition d'oxydes métalliques calcinée. De préférence, ce prémélange ne sera pas hydraté. Enfin, le défloculant par exemple sous forme de poudre pourra être ajouté.

Ci-après seront détaillés des modes de réalisation préférés ou non des matières premières pouvant être mise en oeuvre dans le cadre de plusieurs aspects de la présente invention.

### Matrice argileuse crue

Une des particularités de la présente invention est d'utiliser de l'argile crue pour former le liant pour la terre crue qui servira de base à la brique de terre compressée 51.

Une matrice argileuse crue pourra avoir été préparée au niveau d'un système 1 de fabrication de brique en terre compressée 51 à partir d'une terre argileuse telle qu'une terre argileuse excavée. Alternativement, une matrice argileuse crue peut être livrée après sa préparation sur un autre site.

La matrice argileuse crue peut par exemple comporter au moins une espèce minérale sélectionnée parmi : Illite, Kaolinite, Smectite, Bentonite, Vermiculite, Chlorite, Montmorillonites, Muscovite, Halloysite, Sépiolite, et Attapulgite.

De façon préférée, la matrice argileuse crue comporte au moins deux types d'argiles sélectionnés parmi : Illite, Kaolinite, Smectite, Bentonite, Vermiculite, Chlorite, Montmorillonites, Muscovite, Halloysite, Sépiolite, et Attapulgite. Cela inclut les argiles dites interstratifiées qui sont des combinaisons complexes de plusieurs argiles. Encore plus préférée, la matrice argileuse crue comporte au moins une espèce minérale sélectionnée parmi : Kaolinite, Illite, Smectite, Bentonite, Chlorite Montmorillonites, et Vermiculite.

Le tableau 1 ci-dessous présente les caractéristiques chimiques de ces espèces minérales.

[Tableau 1]

| | Type d'argile | Composition |
|---|---|---|
| Matrice Argileuse Crue | Illite | $(K,H_3O)(Al,Mg,Fe)_2(Si,Al)_4O_{10}[(OH)_2,(H_2O)]$ |
| | Smectite | $(Na,Ca)_{0,3}(Al,Mg)_2Si_4O_{10}(OH)_2$, n $H_2O$ |
| | Kaolinite | $Al_2Si_2O_5(OH)_4$ |
| | Bentonite | $(Na,Ca)_{0,3}(Al,Mg)_2Si_4O_{10}(OH)_2$ |
| | Vermiculite | $(Mg,Ca)_{0,7}(Mg,Fe,Al)_6(Al,Si)_8O_{22}(OH)_4$, n $H_2O$ |
| | Chlorite | $(Fe,Mg,Al)_6(Si,Al)_4O_{10}(OH)_8$ |
| | Muscovite | $KAl_2(AlSi_3O_{10})(OH,F)_2$ |
| | Halloysite | $Al_2Si_2O_5(OH)_4$ |
| | Sépiolite | $Mg_4Si_6O_1(OH)_2$, n $H_2O$ |
| | Attapulgite | $(Mg,Al,Fe^{3+})_5[Si_8O_{20}](OH)_2(OH2)_4$ n $H_2O$ |

Selon un mode préféré, un liant pour brique de terre compressée 51 selon l'invention comportera au moins deux types d'argiles différents et comportera de la smectite (Smectite, Bentonite, Montmorillonites), de la kaolinite, et/ou de l'illite.

En particulier, une matrice argileuse crue selon la présente invention pourra comporter au moins 25 % de kaolinite et/ou d'illite. Les matrices argileuses crues comportant une majorité de kaolinite et/ou d'illite auront la préférence dans le cadre de la présente invention. Cela peut par exemple correspondre à une matrice argileuse comportant plus de 25 % de kaolinite et plus de 25% d'illite, ou encore une matrice argileuse comportant plus de 40 % de kaolinite et plus de 10% d'illite. Ainsi, une matrice argileuse crue selon la présente invention comportera de préférence au moins 50% en poids sec de kaolinite et/ou d'illite, de façon plus préférée au moins 70% en poids sec de kaolinite et/ou d'illite.

De façon plus préférée, la matrice argileuse crue d'un liant pour brique de terre compressée 51 selon l'invention comprend au moins une argile crue de la famille des Smectites et au moins une autre argile crue sélectionnée parmi Kaolinite, Illite, Chlorite et Vermiculite. En particulier, la matrice argileuse crue comprend de la smectite, de préférence de la Montmorillonite. La famille des Smectites comporte notamment les Montmorillonites et la Bentonite. En particulier, la matrice argileuse comporte au moins 10 % en poids de Smectite, de préférence de Montmorillonite, de façon préférée au moins 20 % en poids. En effet, si la matrice argileuse crue comporte au moins une argile crue de la famille des Smectites et en particulier lorsque l'au moins une argile crue de la famille des Smectites représente, plus de 20 % en poids de la matrice argileuse crue, de préférence au moins 30% en poids de la matrice argileuse crue, alors la brique de terre compressée 51 formée allie propriétés mécaniques et capacité de tampon hydrique.

Le type d'argile pourra être déterminé par les méthodes connues de la personne du métier. En particulier, il sera possible d'utiliser de la diffractométrie des rayons X. Par exemple les conditions suivantes pourront être utilisées :

- Appareillage : Diffractomètre, par exemple un BRUKER D8 ADVANCE (Géométrie Bragg-Brentano) ; par exemple présentant les réglages suivants : Tube au Cuivre ($\lambda$ K$\alpha$1 $\approx$ 1.54 Å) Puissance du générateur : 40 kV, 40 mA ; Optiques primaires : fente fixe 0.16° ; fente de Soller 2.5° ; Optique secondaire : fente de Soller 2.5° ; Détecteur LynXeye XE-T
- Paramètres d'acquisition : Balayage de 4 à 90°2$\theta$ ; Vitesse de balayage de 0,03°2$\theta$/seconde, Temps de comptage : 480 secondes par pas ; Echantillon tournant.

De façon préférée, la matrice argileuse crue utilisée dans le cadre de l'invention comprend au moins 20 % en poids de Smectite, d'Illite et/ou de Kaolinite, par exemple au moins 30 % en poids de Smectite, d'Illite et/ou de Kaolinite, de façon préférée au moins 40 % en poids de Smectite, d'Illite et/ou de Kaolinite, de façon plus préférée au moins 50 % en poids de Smectite, d'Illite et/ou de Kaolinite et de façon encore plus préférée au moins 60 % en poids de Smectite, d'Illite et/ou de Kaolinite. Le pourcentage en poids correspondant au pourcentage cumulé de Smectite, d'Illite et de Kaolinite.

En particulier, une matrice argileuse selon l'invention peut comprendre entre 20 et 80 % en poids de Smectite, d'Illite et/ou de Kaolinite, de façon préférée entre 30 et 70 % en poids de Smectite, d'Illite et/ou de Kaolinite ou entre 40 et 60 % en poids de Smectite, d'Illite et/ou de Kaolinite, de façon plus préférée entre 40 et 60 % en poids de Smectite, d'Illite et/ou de Kaolinite. De façon préférée, la Smectite pourra être de la Montmorillonite.

La matrice argileuse crue pourra, de façon préférée, correspondre au moins en partie à une terre argileuse excavée, de préférence une terre argileuse excavée non calcinée, telle qu'une terre argileuse excavée crue traitée.

Comme cela a été décrit, la matrice argileuse crue pourra avantageusement avoir été traitée, ledit traitement étant sélectionné parmi : broyage, triage, tamisage et/ou séchage.

De préférence, la matrice argileuse crue utilisée dans le liant a été broyée.

Avantageusement, la matrice argileuse crue comportera de l'argile crue broyée. De façon préférée, la matrice argileuse crue pourra présenter une D50 inférieure ou égale à 500 $\mu$m, de préférence inférieure ou égale à 250 $\mu$m, de façon plus préférée inférieure ou égale à 100 $\mu$m ou de façon encore plus préférée inférieure ou égale à 50 $\mu$m.

En outre, la matrice argileuse crue pourra présenter une D50 supérieure ou égale à 0,1 $\mu$m, de préférence supérieure ou égale à 1 $\mu$m, de façon plus préférée supérieure ou égale à 10 $\mu$m ou de façon encore plus préférée supérieure ou égale à 20 $\mu$m, de manière plus préférée, supérieure à 40 $\mu$m. Cela permet de limiter les contraintes sur les outils productifs industriels dédiés au broyage.

De façon plus préférée, la matrice argileuse crue pourra présenter une D50 comprise entre 10 $\mu$m et 500 $\mu$m, de préférence comprise entre 15 $\mu$m et 250 $\mu$m, de façon plus préférée comprise entre 20 $\mu$m et 150 $\mu$m ou de façon encore plus préférée comprise entre 20 $\mu$m et 50 $\mu$m. La présence d'une argile broyée de façon à atteindre de tels diamètres peut permettre d'améliorer la performance de la brique de terre compressée 51 produite selon l'invention.

Avantageusement, la matrice argileuse crue pourra comporter au moins 2 % en poids de particules de limon, de préférence au moins 4 % en poids, de façon plus préférée au moins 6 % en poids. Par exemple, la matrice argileuse crue pourra comporter au plus 50 % en poids de particules de limon, de préférence au plus 30 % en poids, de façon plus préférée au plus 20 % en poids. Par exemple, la matrice argileuse crue pourra comporter de 2 % à 50 % en poids de particules de limon, de préférence de 4 % à 30 % en poids, de façon plus préférée de 6 % à 20 % en poids. Les particules de limon sont en particulier des particules présentant un diamètre compris entre 2 μm et 200 μm.

La matrice argileuse crue pourra comporter au moins 1 % en poids de sable, de préférence au moins 2 % en poids, de façon plus préférée au moins 3 % en poids. Par exemple, la matrice argileuse crue pourra comporter au plus 70 % en poids de sable, de préférence au plus 50 % en poids, de façon plus préférée au plus 40 % en poids. Par exemple, la matrice argileuse crue pourra comporter de 1 % à 70 % en poids de particules de sable, de préférence de 2 % à 50 % en poids, de façon plus préférée de 3 % à 40 % en poids. Le sable correspond en particulier des particules présentant un diamètre compris entre 63 μm et 2 mm.

L'utilisation d'une matrice argileuse crue broyée et à granulométrie contrôlée est importante en particulier lors de la préparation du liant pour brique de terre compressée 51.

Lors de l'étape de formation 230 du liant, la proportion massique en poids sec de matrice argileuse crue dans le liant est d'au moins 10%. De préférence, la proportion massique en poids sec de matrice argileuse crue dans le liant est d'au moins 15%, de façon plus préférée d'au moins 20% et de façon encore plus préférée d'au moins 30%. De préférence, la proportion massique en poids sec de matrice argileuse crue dans le liant est d'au plus 70%, de façon plus préférée d'au plus 60% et de façon encore plus préférée d'au plus 50%. Par exemple, la proportion massique en poids sec de matrice argileuse crue dans le liant est de 10 % à 80%, de préférence de 20 % à 70%, de façon plus préférée de 30 % à 70%, et de façon plus préférée de 30 % à 65%.

Lors de l'étape de formation 230 du liant, la proportion massique en poids sec d'argile crue dans le liant est d'au moins 5%. De préférence, la proportion massique en poids sec d'argile crue dans le liant est d'au moins 10%, de façon plus préférée d'au moins 20% et de façon encore plus préférée d'au moins 30%. De préférence, la proportion massique en poids sec d'argile crue dans le liant est d'au plus 75%, de façon plus préférée d'au plus 60% et de façon encore plus préférée d'au plus 50% par exemple d'au plus 40%.

## Composition d'activation

Avantageusement, la composition d'activation est une composition d'activation alcaline. Elle comporte alors de préférence comporte au moins une base, telle qu'une base faible ou une base forte. La composition d'activation alcaline peut de préférence comporter un ou plusieurs composés présentant un pKa supérieur ou égal à 8, de façon plus préférée supérieur ou égal à 10, de façon plus préférée supérieur ou égal à 12, de façon encore plus préférée supérieur ou égal à 14. La composition d'activation pourra être ou comporter de la chaux, des carbonates, du ciment tel que du ciment Portland CEM I, du ciment composé (CEM II), du ciment de haut fourneau (CEM III/A) et du ciment composé (CEM V/A) conformes aux normes NF EN 197-1 et NF EN 197-4 ou encore au ciment à maçonner (MC) conforme à la norme NF EN 413-1.

Ainsi, la composition d'activation peut comporter des sulfates, des hydroxydes, des carbonates, des silicates, des lactates, des organophosphorés, de la chaux ou leurs combinaisons.

De façon préférée, la composition d'activation comporte des hydroxydes et des silicates. En particulier, la composition d'activation peut comporter un mélange d'hydroxyde de sodium et de silicate de sodium. Lorsque la composition d'activation comporte des silicates, le pourcentage de silicate dans le liant provenant de la composition d'activation et le pourcentage de silicate dans le liant provenant de la composition d'oxydes métalliques calcinée sont comptabilisés séparément.

En particulier, la composition d'activation peut comporter un mélange de sulfate de sodium et de chlorure de sodium.

De façon préférée, la composition d'activation comporte des silicates et des carbonates. En particulier, la composition d'activation peut comporter un mélange de silicate de sodium ou de potassium et de carbonate de sodium ou de potassium.

De façon plus préférée, la composition d'activation alcaline comporte des hydroxydes.

La composition d'activation peut comporter un composé organophosphoré tel que le tri-polyphosphate de sodium. De préférence, le composé organophosphoré représente au moins 2% en poids du liant pour brique de terre compressée 51.

De façon préférée, la composition d'activation comporte un lactate tel que du lactate de sodium, de potassium, et/ou de lithium.

Avantageusement, la composition d'activation comporte un oxyde d'un métal présentant au moins deux électrons de valence. En particulier, la composition d'activation peut comporter au moins 40 % en poids d'au moins un oxyde métallique correspondant à l'oxyde d'un métal présentant au moins deux électrons de valence. Par exemple, les au moins 40% en poids peuvent correspondre à plusieurs oxydes métalliques différents. Toutefois de façon préférée, la composition d'activation, de préférence lorsque celle-ci est une composition d'activation alcaline, pourra comporter un seul oxyde d'un métal présentant au moins deux électrons de valence ou plus de 50% en poids de cet oxyde métallique.

De façon préférée, la composition d'activation comporte au moins 50 % en poids d'au moins un oxyde métallique correspondant à l'oxyde d'un métal, ou d'un alcalinoterreux, présentant au moins deux électrons de valence, de façon plus préférée au moins 60 % en poids ; de façon encore plus préférée au moins 80 % en poids.

La composition d'activation peut être une composition liquide. En particulier, la composition d'activation peut être une composition aqueuse. Comme cela sera décrit par la suite, son utilisation peut être combinée à l'ajout d'eau lors de la formation d'un mélange pour brique en terre compressée 51. Néanmoins, alternativement, la composition d'activation se présente sous forme solide, par exemple sous forme de poudre. Le pourcentage indiqué de composition d'activation alcaline correspond au poids sec de la composition.

L'étape de formation 230 du liant utilisé peut comporter l'utilisation d'au moins 5 % en poids sec d'une composition d'activation. De façon préférée, il comprend l'utilisation d'au moins 7 % en poids sec d'une composition d'activation. De façon préférée, il comprend l'utilisation d'au moins 10 % en poids sec d'une composition d'activation. De façon encore plus préférée, il comprend l'utilisation d'au moins 12 % en poids sec d'une composition d'activation, par rapport au poids sec de liant.

L'étape de formation 230 du liant utilisé peut comporter l'utilisation d'au plus 50 % en poids sec d'une composition d'activation. De façon préférée, il comprend l'utilisation d'au plus 45 % en poids sec d'une composition d'activation. De façon préférée, il comprend l'utilisation d'au plus 40 % en poids sec d'une composition d'activation. De façon encore plus préférée, il comprend l'utilisation d'au plus 35 % d'une composition d'activation, par rapport au poids sec de liant.

L'étape de formation 230 du liant utilisé peut comporter l'utilisation de 5 % à 50 % en poids sec d'une composition d'activation. De façon préférée, il comprend l'utilisation de 7 % à 45 % en poids sec d'une composition d'activation. De façon préférée, il comprend l'utilisation de 10 % à 40 % en poids sec d'une composition d'activation. De façon encore plus préférée, il comprend l'utilisation de 12 % à 35 % d'une composition d'activation, par rapport au poids sec de liant.

Le liant pour brique de terre compressée 51, lorsque sa préparation aura intégré l'ajout d'une composition d'activation alcaline, comportera de préférence au moins 0,1% en poids de sodium ou de potassium, de façon plus préférée au moins 0,2% en poids de sodium ou de potassium.

## Composition d'oxydes métalliques calcinée

Une composition d'oxydes métalliques calcinée comporte avantageusement des oxydes métalliques sélectionnés parmi : $FeO$, $Fe_3O_4$, $Fe_2O_3$, $Al_2O_3$, $MnO$, $TiO_2$, $MgO$ et leurs mélanges.

Une composition d'oxydes métalliques calcinée peut également comporter des aluminosilicates.

La composition d'oxydes métalliques calcinée est par exemple sélectionnée parmi des laitiers de hauts fourneaux, des pouzzolanes telles que des cendres volcaniques, des cendres volantes, de la fumée de silice, du métakaolin, des cendres de matières végétales telles que des cendres de riz, des résidus de bauxite ou leurs combinaisons.

En particulier, la composition d'oxydes métalliques calcinée est par exemple sélectionnée parmi des laitiers de hauts fourneaux, des pouzzolanes telles que des cendres volcaniques, des cendres volantes, de la fumée de silice, des cendres de matières végétales telles que des cendres de riz, des résidus de bauxite ou leurs combinaisons.

De façon préférée, les oxydes métalliques sont des oxydes de métaux de transition. Les oxydes métalliques peuvent de préférence provenir d'une composition de laitiers de hauts fourneaux par exemple formés lors de l'élaboration de la fonte à partir de minerai de fer.

La composition d'oxydes métalliques est dite calcinée car ses constituants ont été portés à une température supérieure à 500°C. Par exemple, la composition d'oxydes métalliques calcinée peut comporter des composés issus d'un procédé industriel comportant une combustion, une calcination ou une cuisson à une température supérieure à 500°C.

La composition d'oxydes métalliques calcinée pourra prendre la forme d'une poudre.

Les inventeurs ont identifié une importance de la quantité massique d'oxydes métalliques en combinaison avec la matrice argileuse crue et la composition d'activation.

L'étape de formation 230 du liant utilisé peut comporter l'utilisation d'au moins 5 % en poids sec d'une composition d'oxydes métalliques calcinée. De façon préférée, il comprend l'utilisation d'au moins 7 % en poids sec d'une composition d'oxydes métalliques calcinée. De façon préférée, il comprend l'utilisation d'au moins 10 % en poids sec d'une composition d'oxydes métalliques calcinée. De façon encore plus préférée, il comprend l'utilisation d'au moins 12 % d'une composition d'oxydes métalliques calcinée, par rapport au poids sec de liant.

Néanmoins, contrairement à d'autres solutions techniques privilégiant une concentration très élevée de laitiers de hauts fourneaux, cendres volantes ou métakaolin, les inventeurs de la présente invention ont déterminé qu'il était préférable de ne pas dépasser certaines quantités de composition d'oxydes métalliques calcinée dans le liant. En particulier, l'étape de formation 230 du liant utilisé peut comporter l'utilisation d'au plus 50 % en poids sec d'une composition d'oxydes métalliques calcinée. De façon préférée, il comprend l'utilisation d'au plus 45 % en poids sec d'une composition d'oxydes métalliques calcinée. De façon préférée, il comprend l'utilisation d'au plus 40 % en poids sec d'une composition d'oxydes métalliques calcinée. De façon encore plus préférée, il comprend l'utilisation d'au plus 35 % d'une composition d'oxydes métalliques calcinée, par rapport au poids sec de liant.

L'étape de formation 230 du liant utilisé peut comporter l'utilisation de 5 % à 50 % en poids sec d'une composition d'oxydes métalliques calcinée. De façon préférée, il comprend l'utilisation de 7 % à 45 % en poids sec d'une composition d'oxydes métalliques calcinée. De façon préférée, il comprend l'utilisation de 10 % à 40 % en poids sec d'une composition d'oxydes métalliques calcinée. De façon encore plus préférée, il comprend l'utilisation de 12 % à 35 % d'une composition d'oxydes métalliques calcinée, par rapport au poids sec de liant.

En outre, les inventeurs ont identifié que certaines valeurs de rapport entre la quantité massique de composition d'oxydes métalliques calcinée et la quantité massique de matrice argileuse crue permettait d'améliorer les performances d'une brique de terre compressée 51 ainsi constituée. Avantageusement, la composition d'oxydes métalliques calcinée et la matrice argileuse crue sont mélangées pour former un liant pour brique de terre compressée 51 de façon à ce qu'un ratio massique de la composition d'oxydes métalliques calcinée sur la matrice argileuse crue soit compris entre 0,2 et 3, de préférence 0,4 et 2,5, de façon plus préférée 0,5 et 2. En particulier, la composition d'oxydes métalliques calcinée et la matrice argileuse crue sont mélangées pour former un liant pour brique de terre compressée 51 de façon à ce qu'un ratio massique d'oxydes métalliques sur la teneur en argile soit compris entre 0,2 et 3, de préférence 0,4 et 2,5, de façon plus préférée 0,5 et 2.

Un liant pour brique de terre compressée 51 selon l'invention comporte de préférence au plus 70 % en poids sec d'oxydes métalliques, de façon plus préférée au plus 60 % en poids sec d'oxydes métalliques et de façon encore plus préférée au plus 50 % en poids sec d'oxydes métalliques. De même, à titre d'exemple, un liant pour brique en terre compressée 51 selon la présente invention pourra comporter moins de 30 % en poids sec d'oxydes métalliques, de préférence moins de 20 %, de façon plus préférée moins de 10%.

**Défloculant**

La présence d'un ou de plusieurs défloculant(s) peut améliorer les performances de la brique de terre compressée 51 selon l'invention et notamment entrainer une réduction de la durée de cure nécessaire. En outre, la présence d'un ou de plusieurs défloculants peut permettre de réduire la friabilité des briques en terre compressées 51 fabriquées. Ainsi, avantageusement, un liant pour brique de terre compressée 51 produit dans le cadre de l'invention comporte un défloculant, avantageusement un défloculant organique.

De nombreux composés peuvent faire office d'agents défloculant et beaucoup sont généralement connus de l'homme du métier.

Dans le cadre de l'invention, l'agent défloculant est en particulier un surfactant non-ionique tel qu'un éther de polyoxyéthylène. L'éther de polyoxyéthylène peut par exemple être sélectionné parmi : un éther de lauryl poly(oxyéthylène).

L'agent défloculant peut aussi être un agent anionique tel qu'un surfactant anionique. En particulier, l'agent anionique peut être sélectionné parmi : des sulfonates, des sulfonates d'alkylaryle, des aminoalcool, des acides gras, des humates (e.g. humates de sodium), des acides carboxyliques, des lignosulfonates (e.g. lignosulfonates de sodium), des polyacrylates, des carboxyméthylcelluloses et leurs mélanges.

L'agent défloculant peut aussi être un polyacrylate. Il peut alors être sélectionné par exemple parmi du polyacrylate de sodium et du polyacrylate d'ammonium.

L'agent défloculant peut également être une amine sélectionnée par exemple parmi : les 2-amino-2-methyl-1-propanol ; mono-, di- ou triethanolamine ; les isopropanolamines (1-amino-2-propanol, diisopropanolamine et triisopropanolamine) et N-alkylated ethanolamines.

Alternativement, l'agent défloculant peut être un mélange de composés, tel qu'un mélange comportant au moins deux composés sélectionnés parmi : surfactant non-ionique, agent anionique, polyacrylate, amine et composé organophosphoré.

L'agent défloculant est de préférence un agent défloculant organique. Selon la présente invention, un agent défloculant organique comporte au moins un atome de carbone et de préférence au moins une liaison carbone-oxygène. De façon préférée, l'agent de défloculation organique est sélectionné parmi : un polysulphonate, un lignosulphonate (e.g. lignosulphonate de sodium), un polyacrylate, un humate, un polycarboxylate tel qu'un polycarboxylate d'ether, et leurs mélanges. De façon plus préférée, l'agent de défloculation comporte un humate, un lignosulphonate et/ou un polyacrylate.

L'agent défloculant est de préférence utilisé sous forme d'un sel. Cependant, l'invention ne saurait se limiter aux agents défloculant cités précédemment ou leurs sels. Cependant, l'invention ne saurait se limiter aux agents défloculants organiques cités précédemment. Tout type d'agent défloculant organique connu par l'homme du métier peut être utilisé en lieu et place desdits agents défloculants cités précédemment.

Les défloculants utilisables selon la présente invention pourront prendre une forme solide ou une forme liquide. Avantageusement, le ou les moyens de mesure sont configurés pour ajouter juste la bonne quantité d'adjuvant en fonction de la matrice argileuse crue utilisée et en particulier en fonction des valeurs de caractéristiques de la matrice argileuse crue mesurées.

L'agent défloculant peut par exemple représenter de 0 % à 5 % en poids sec du liant pour brique de terre compressée 51. En effet, dans le cadre d'un procédé selon l'invention, il peut y avoir absence d'agent défloculant.

Par exemple, l'agent défloculant représente au moins 0,1 % en poids sec du liant pour brique de terre compressée 51. De façon préférée, l'agent défloculant représente au moins 0,15 % en poids sec du liant pour brique de terre compressée 51. De façon plus préférée, l'agent défloculant représente au moins 0,2 % en poids sec du liant pour brique de terre compressée 51. De façon encore plus préférée, l'agent défloculant représente au moins 0,5% en poids sec du liant pour brique de terre compressée 51.

Par exemple, l'agent défloculant représente au plus 10 % en poids sec du liant pour brique de terre compressée 51. De façon préférée, l'agent défloculant représente au plus 7 % en poids sec du liant pour brique de terre compressée 51. De façon plus préférée, l'agent défloculant représente au plus 5 % en poids sec du liant pour brique de terre compressée 51. De façon encore plus préférée, l'agent défloculant représente au plus 3 % en poids sec du liant pour brique de terre compressée 51.

Par exemple, l'agent défloculant représente de 0,1 % à 10% en poids sec du liant pour brique de terre compressée 51. De façon préférée, l'agent défloculant représente de 0,15 % à 7% en poids sec du liant pour brique de terre compressée 51. De façon plus préférée, l'agent défloculant représente de 0,2 % à 5% en poids sec du liant pour brique de terre compressée 51. De façon encore plus préférée, l'agent défloculant représente de 0,5 % à 3% en poids sec du liant pour brique de terre compressée 51.

En particulier, l'agent défloculant représente au moins 0,5 % en poids sec de la matrice argileuse crue, de préférence au moins 0,75 % en poids sec de la matrice argileuse crue, de façon plus préférée au moins 1 % en poids sec de la matrice argileuse crue, de façon encore plus préférée au moins 2,5 % en poids sec de la matrice argileuse crue, et par exemple au moins 4 % en poids sec de la matrice argileuse crue.

**Terre(s) crue(s)**

La ou les terre(s) crue(s) utilisée(s) dans le cadre de la présente invention peuvent avoir de multiples origines. Par exemple, la terre crue utilisée peut correspondre à une terre crue excavée. La terre crue utilisée peut en particulier correspondre à des sables de recyclage ou encore des sables de curage (e.g. étang, lac, rivières, fleuves, ports...).

Pour la fabrication des BTC 51, de préférence, la terre crue utilisée ne comporte pas de matière organique. Par exemple, elle comporte moins de 5% en poids sec de matière organique. La matière organique peut être mesurée par toute méthode connue de la personne du métier comme par exemple selon les indications de la norme NF P94-055.

Comme cela a été mentionné, la terre crue aura de préférence été tamisée. En outre, avantageusement au moins une des terres crues utilisée aura été broyée.

L'utilisation d'une terre crue broyée et à granulométrie contrôlée est très importante lors de la fabrication de brique de terre compressée 51. Ainsi, une brique de terre compressée 51 selon l'invention peut avantageusement comporter une terre crue broyée, par exemple avec une D50 inférieure à 500 μm d'une part et d'une terre crue broyée grossièrement ou non broyée, par exemple avec une D50 supérieure à 500 μm d'autre part.

Il est possible que la terre crue ne comporte pas d'argile ou des teneurs très faibles. Par exemple, la terre crue peut comporter moins de 15 % en poids sec d'argile, de préférence de 0% à 10% en poids sec, de façon encore plus préférée de 0% à 5 % en poids sec, de façon encore plus préférée de 0% à 2 % en poids sec par rapport au poids sec de terre crue. Au contraire, pour certaines applications, notamment avec des MBV améliorées, la terre crue pourra comporter au moins 10% en poids sec d'argile crue, de préférence au moins 15% en poids sec d'argile crue, de façon plus préférée au moins 20% et de façon encore plus préférée au moins 25% en poids sec, par rapport au poids sec de terre crue.

Généralement, au moins une des terres crues utilisées, de préférence au moins deux, pourra comporter de 5 % à 60% en poids sec d'argile crue, de préférence, de 7 % à 50% en poids sec d'argile crue, de façon plus préférée de 10 % à 30% en poids sec et de façon encore plus préférée de 10 % à 15% en poids sec, par rapport au poids sec de terre crue.

Une terre crue pourra comporter au moins 15% en poids sec de sable. De préférence, une terre crue comporte au moins 20% en poids sec de sable, de façon plus préférée au moins 25% en poids sec et de façon encore moins préférée au moins 40% en poids sec. De préférence, une terre crue comporte au plus 95% en poids sec de sable, de façon plus préférée au plus 90% en poids sec et de façon encore plus préférée au plus 80% en poids sec. Généralement, une terre crue utilisée pourra comporter de 0 % à 80% en poids sec de sable, de préférence, de 5 % à 70% en poids sec de sable, de façon plus préférée de 10 % à 65% en poids sec et de façon encore plus préférée de 15 % à 60% en poids sec de sable, par rapport au poids sec de terre crue.

Une terre crue pourra comporter au moins 10% en poids sec de limon. De préférence, une terre crue comporte au moins 15% en poids sec de limon, de façon plus préférée au moins 20% et de façon encore plus préférée au moins 30%. De préférence, une terre crue comporte au plus 90% en poids sec de limon, de façon plus préférée au plus 80% et de façon encore plus préférée au plus 70% en poids sec de limon. Généralement, une terre crue utilisée pourra comporter de 0 % à 80% en poids sec de limon, de préférence, de 5 % à 70% en poids sec de limon, de façon plus préférée de 10 % à 65% en poids sec de limon et de façon encore plus préférée de 15 % à 60% en poids sec de limon, par rapport au poids sec de terre crue.

Plus largement, la fabrication d'une brique de terre compressée 51 selon l'invention pourra comporter l'ajout de granulats qui pourront correspondre à des granulats naturels, des granulats artificiels ou encore des granulats recyclés.

## Granulats

Les granulats pourront en outre comporter des granulats minéraux, c'est-à-dire principalement constitués de matière minérale et/ou des granulats végétaux, c'est-à-dire principalement constitués de matière d'origine végétale. Les granulats pourront aussi comporter des granulats marins, c'est-à-dire principalement constitués de matière organique ou inorganique provenant des fonds marins telles que des granulats siliceux et des substances calcaires (e.g. maërl et sables coquilliers).

Les granulats minéraux pourront par exemple correspondent à du sable, des gravillons, des graviers, des fillers (ou matériaux fins), des poudres, déchets fossilisés et à leur combinaison.

Les granulats végétaux pourront par exemple correspondre à du bois (copeaux ou fibres), du chanvre, de la paille, de la chènevotte de chanvre, du miscanthus, du tournesol, du typha, du maïs, du lin, des balles de riz, des balles de blé, du colza, des algues, du bambou, la ouate de cellulose, du tissu défibré et à leur combinaison.

En particulier, lorsque la brique de terre compressée 51 selon l'invention comporte des granulats végétaux, elle comporte de préférence au moins 0,1 % en poids de granulats végétaux, de préférence au moins 0,2 % en poids de granulats végétaux, de façon plus préférée au moins 0,5% en poids de granulats végétaux, et de façon encore plus préférée au moins 0,7% en poids de granulats végétaux.

Le procédé de fabrication 200 selon l'invention comporte une **étape de mélange 240** du liant avec au moins une terre crue, de préférence au moins deux terres crues. De préférence et comme cela a été présenté, l'étape de mélange est réalisée avec au moins une terre crue broyée.

En particulier, lors de l'étape de mélange 240 du liant avec la terre crue, le liant représente au moins 3% en poids sec du mélange. De préférence, le liant représente au moins 4 % en poids sec du mélange, de façon plus préférée au moins 5% et de façon encore plus préférée au moins 6 % en poids sec du mélange.

En outre, de façon à limiter l'empreinte environnementale, la teneur en liant est contrôlée. Par exemple, le liant représente au plus 15 % en poids sec du mélange. De préférence, le liant représente au plus 12 % en poids sec du mélange, de façon plus préférée au plus 10% et de façon encore plus préférée au plus 8% en poids sec du mélange. Par exemple, le liant représente de 3% à 15 % en poids sec du mélange. De préférence, le liant représente de 4 à 12 % en poids sec du mélange, de façon plus préférée de 5 % à 10% et de façon encore plus préférée de 6% à 8% en poids sec du mélange.

Par exemple, une des terres crues utilisées, de préférence une terre crue broyée, présente une D50 inférieure à 500 $\mu$m, de préférence une D50 inférieure ou égale à 250 $\mu$m, de préférence inférieure ou égale à 150 $\mu$m, de façon plus préférée inférieure ou égale à 100 $\mu$m, de façon encore plus préférée inférieure ou égale à 80 $\mu$m. La D50 pourra par exemple être mesurée par tri granulométrique via des tamis, par exemple selon les indications de la norme ASTM D6913-04. En particulier, une des terres crues utilisées, de préférence une terre crue broyée, pourra présenter une D10 inférieure ou égale à 30 $\mu$m, de façon plus préférée inférieure ou égale à 20 $\mu$m, de façon encore plus préférée inférieure ou égale à 10 $\mu$m. La D10 pourra par exemple être mesurée par analyse granulométrique laser, par exemple selon les indications de la norme ISO 13320:2020.

En outre, une autre des terres crues utilisées présente une D50 supérieure à 500 $\mu$m, de préférence supérieure ou égale à 750 $\mu$m, de façon plus préférée supérieure ou égale à 1 mm, de façon encore plus préférée supérieure ou égale à 1,5 mm. La D50 pourra par exemple être mesurée par tri granulométrique via des tamis, par exemple selon les indications de la norme ASTM D6913-04. En particulier, une des terres crues utilisées, de préférence une terre crue broyée, pourra présenter une D90 supérieure ou égale à 3 mm, de façon plus préférée une D90 supérieure ou égale à 4 mm, de façon encore plus préférée une D90 supérieure ou égale à 5 mm. La D90 pourra par exemple être mesurée par tri granulométrique via des tamis, par exemple selon les indications de la norme ASTM D6913-04.

En particulier, l'étape de mélange 240 peut comporter l'ajout d'eau, par exemple sous forme de pulvérisation d'eau sur le mélange.

L'étape de mélange 240 permet généralement de réaliser un mélange intime entre le liant et la terre crue. En outre, l'ajout d'eau permet d'initier la prise du liant au sein de la terre crue ou des terres crues.

L'étape de mélange 240 peut être réalisée généralement avec un malaxeur, par exemple un malaxeur à béton. L'étape de mélange 240 peut comporter une extrusion du mélange.

L'étape de mélange 240 est généralement réalisée sur une durée suffisante pour permettre un mélange intime entre le liant et la terre crue ou les terres crues. Par exemple, l'étape de mélange 240 est réalisée pendant au moins 5 secondes après l'ajout de la terre crue, de préférence pendant au moins 10 secondes après l'ajout de la terre crue, de façon plus préférée pendant au moins 20 secondes après l'ajout de la terre crue et de façon encore plus préférée pendant au moins 30 secondes après l'ajout de la terre crue. Par exemple, l'étape de mélange 240 est réalisée pendant au plus 60 minutes après l'ajout de la terre crue, de préférence pendant au plus 40 minutes après l'ajout de la terre crue, de façon plus préférée pendant au plus 20 minutes après l'ajout de la terre crue et de façon encore plus préférée pendant au plus 10 minutes après l'ajout de la terre crue.

En particulier, l'étape de mélange 240 pourra être réalisée en plusieurs sous-étapes. Par exemple, le procédé de fabrication 200 pourra comporter l'ajout dans un premier temps d'une première terre crue présentant certaines propriétés granulométriques. Le procédé de fabrication 200 pourra alors comporter l'ajout dans un deuxième temps d'une deuxième terre crue présentant des propriétés granulométriques différentes ou encore d'un granulat, tel qu'un granulat végétal.

Avantageusement, le procédé de fabrication 200 pourra comporter, lors de l'étape de mélange 240, l'ajout dans un premier temps d'une quantité de première terre crue présentant des premières propriétés granulométriques puis dans un deuxième temps l'ajout d'une quantité de seconde terre crue présentant des secondes propriétés granulométriques, les quantités de première terre crue et de seconde terre crue étant calculée, par un ou plusieurs processeurs, en fonction des premières et secondes propriétés granulométriques. En outre, de façon préférée, les quantités de première terre crue et de seconde terre crue sont calculées en prenant en compte les propriétés granulométriques de la matrice argileuse crue utilisée pour former le liant pour brique de terre compressée 51.

Par exemple, le procédé de fabrication 200 pourra comporter, lors de l'étape de mélange 240, l'ajout dans un premier temps d'une quantité de première terre crue présentant des premières propriétés granulométriques puis dans un deuxième temps l'ajout d'une quantité de seconde terre crue, présentant des secondes propriétés granulométriques, les quantités de première terre crue et de seconde terre crue, étant calculée, par un ou plusieurs processeurs, en fonction des quantités d'argile, de sable et/ou de limon dans la matrice argileuse crue, dans la première terre crue et dans la seconde terre crue.

Le procédé pourra également comporter un ajout de granulat en fonction des quantités d'argile, de sable et/ou de limon dans la matrice argileuse crue et dans les terres crues. En outre, l'étape de mélange 240 pourra également comporter un ajout d'une quantité terre crue calculée, la quantité de terre crue à ajouter étant calculée en fonction des quantités d'argile mesurées dans la matrice argileuse crue et dans la terre crue.

Un procédé de fabrication 200 selon l'invention comporte une **étape de mise en forme 250** d'une brique en terre compressée 51 à partir du mélange (i.e. du mélange comportant notamment liant et terre crue). Il existe de très nombreuses méthodes de mise en forme des briques en terre compressées 51.

La compression pourra être manuelle ou automatisée via l'utilisation de compresseur ou de moteurs.

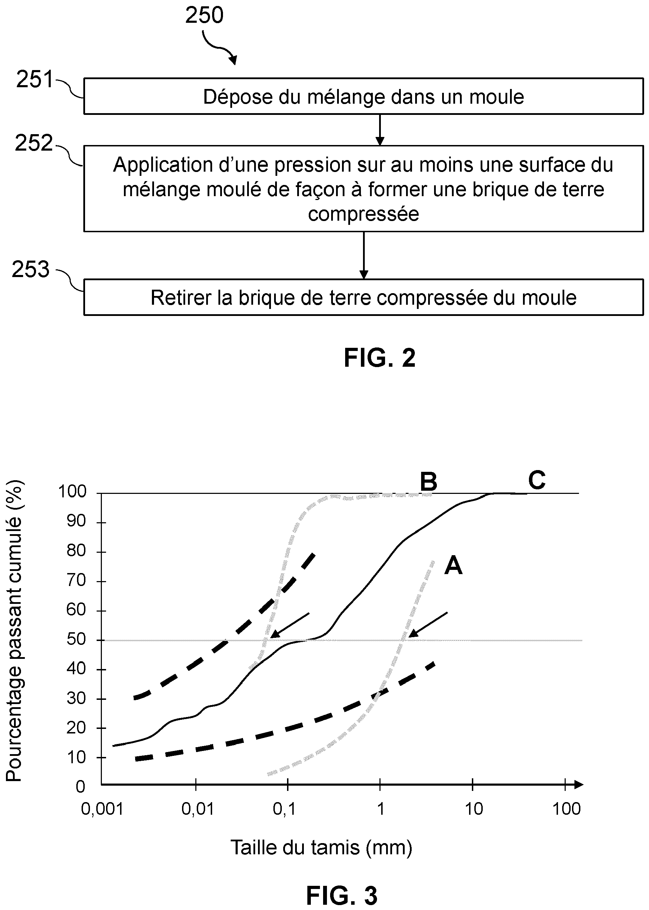

Comme illustré à la **figure 2**, la mise en forme 250 de la brique en terre compressée 51 pourra comporter les étapes suivantes :

- Dépose 251 du mélange dans un moule ;
- Application 252 d'une pression sur au moins une surface du mélange moulé de façon à former une brique de terre compressée 51 ; et
- Retrait 253 de la brique de terre compressée 51 du moule.

Un procédé de fabrication 200 selon l'invention pourra comporter une étape visant à faire vibrer le ou les moules de façon à répartir le mélange dans les moules. Ainsi, le mélange est réparti de façon homogène dans le moule. L'étape de vibration peut être réalisée avec les paramètres habituellement utilisés dans le domaine, en particulier, la fréquence de vibration peut varier en fonction des propriétés ciblées.

Un procédé de fabrication 200 selon l'invention comporte une étape visant à appliquer une pression sur au moins une surface du mélange moulé, de préférence sur la surface supérieure. La pression pourra être exercée via des moyens classiques de formation de briques de terre compressées 51. La pression exercée pourra typiquement correspondre à une pression au moins égale à 50 kg/m$^2$ pendant au moins 15 secondes.

La compression pourra être réalisée par exemple grâce à une presse fixe. Dans ce cas, la presse peut être associée à une centrale équipée de sondes de contrôle de l'hydrométrie des matériaux afin d'avoir une bonne maitrise des consistances des mélanges. Les capacités de production pourront être variables en fonction des produits, toutefois le procédé selon l'invention est avantageusement configuré de façon à fabriquer au moins 5 000 briques de terre compressées 51 sur 12 heures, de préférence au moins 10 000 briques de terre compressées 51 sur 12 heures.

Alternativement, une presse manuelle pourra être utilisée.

Avantageusement, un procédé de fabrication 200 selon l'invention pourra comporter une étape visant à faire vibrer à nouveau les moules avant de retirer les briques de terre compressées 51 des moules. Cette étape permet de faciliter le retrait des moules. L'étape de vibration peut être réalisé avec les paramètres habituellement utilisés dans le domaine.

Le procédé comporte également une étape visant à retirer les briques de terre compressées 51 des moules.

Cette étape est de préférence réalisée juste après avoir compressé le mélange ou juste après avoir vibré à nouveau le moule. Par exemple, l'étape visant à retirer les briques de terre compressées 51 peut être réalisée moins de 5 minutes, de préférence moins de 2 minutes, de façon plus préférée moins de 1 minute, de façon encore plus préférée moins 30 secondes après l'étape visant à placer le mélange dans les moules.

Un procédé de fabrication 200 selon l'invention comporte une étape de cure 260 de la brique en terre compressée 51. En particulier, l'étape de cure 260 pourra comporter une cure humide et/ou une cure sèche. Une brique en terre compressée 51 selon l'invention présente une composition telle qu'elle peut subir une telle cure 260 sans risque de fissuration.

Avantageusement, la durée de la cure pourra être réduite lorsque l'étape de cure 260 comporte une cure dans une étuve à une température comprise entre 50°C et 100°C et de préférence à une humidité relative supérieure ou égale à 80%.

L'étape de cure 260 permet généralement de faire maturer les briques en terre compressées 51 obtenues. Une telle étape permet de laisser le temps aux briques en terre compressées 51 de maturer et permettre une amélioration des propriétés mécaniques, physicochimiques et hygrométriques des briques. En particulier, cette étape, aussi appelée étape de cure peut permettre une augmentation de la résistance à la compression des briques en terre compressées 51 obtenues.

L'étape de cure 260 peut être réalisée sans installation particulière seulement en laissant les briques immobiles après les avoir éventuellement filmées ou non.

Avantageusement, la cure 260 est faite sur une durée d'au plus 25 jours, de préférence d'au plus 20 jours, de façon plus préférée d'au plus 15 jours, et de façon encore plus préférée d'au plus 10 jours, par exemple d'au plus 7 jours. En effet, les briques de terre compressées 51 selon la présente invention présentent l'avantage d'atteindre plus rapidement un plateau pour leur valeur de résistance mécanique en compression. Ainsi, les briques de terre compressées 51 selon la présente invention, outre une empreinte carbone plus faible, présentent des caractéristiques avantageuses pour l'industrialisation de leur production et la réduction des couts opérationnels de préparation.

Avantageusement, l'étape de cure 260 est réalisée de façon à obtenir une brique de terre compressée 51 présentant une résistance à la compression supérieure ou égale à 4 MPa, selon la norme NF EN 771-3+A1/CN.

De façon préférée, l'étape de cure 260 pourra comporter un traitement thermique réalisé à une température supérieure à 25°C, de façon plus préférée supérieure à 30°C. Toutefois, de façon à respecter un bilan énergétique favorable, le traitement thermique, pouvant être réalisé dans le cadre de l'étape de cure, est réalisé à une température inférieure à 100°C, de préférence inférieure ou égale à 80°C. Par exemple, le traitement thermique est réalisé à une température comprise en 20°C et 90°C, de façon préférée le traitement thermique est réalisé à une température comprise en 25°C et 80°C ; de façon encore plus préférée entre 25°C et 65°C. En outre, le traitement thermique peut être réalisé sur l'intégralité de l'étape de cure 260 mais également sur une période plus courte. Ainsi, de façon préférée, le traitement thermique est réalisé sur une durée inférieure à 20 heures, de façon plus préférée inférieure à 15 heures, et de façon encore plus préférée inférieure à 10 heures. Idéalement, la chaleur utilisée pour l'étape de cure 260 provient de la récupération de chaleur fatale issue d'autres process environnants. L'étape de cure 260 pourra en outre comporter une étape de chauffage, entre 20°C et 90°C, de préférence entre 40°C et 80°C. Cette étape de chauffe pourra par exemple être réalisée sur une durée inférieure à 24h, de préférence inférieure ou égale à 16h, de façon plus préférée inférieure ou égale à 12h.

Ainsi, selon **un autre aspect**, l'invention porte sur une **brique de terre compressée 51** susceptible d'être fabriquée par le procédé 200 selon l'invention. En particulier, l'invention porte sur une brique de terre compressée 51 fabriquée par le procédé selon l'invention.

Une brique de terre compressée 51 selon l'invention pourra présenter les caractéristiques issues de tous les modes de réalisation, préférés ou non, des autres aspects de l'invention et en particulier du procédé de fabrication selon la présente invention.

La brique de terre compressée 51 selon l'invention présentera une durée de cure plus faible par rapport à des BTC de l'état de la technique. En outre, pour des quantités de ciment Portland faible, par exemple inférieure à 5% en poids sec de la BTC, elle présentera une résistance mécanique à la compression supérieure à des BTC de l'état de la technique. La brique de terre compressée 51 selon l'invention pourra comporter entre 0,5 et 4 % en poids sec de ciment, en particulier de ciment Portland. La quantité de ciment dans la BTC pourra par exemple être mesurée par quantification des phases par diffractions aux Rayons X (DRX), notamment des phases de bélite, d'alite ou encore des hydrates type silicate de calcium hydraté.

De façon préférée, la brique de terre compressée 51 selon l'invention comportera au moins 5 % en poids sec d'argile crue. Avantageusement, elle comporte un agent de défloculation. De façon préférée, elle comporte au moins 2 % en poids sec d'oxydes métalliques, de préférence au moins 5 % en poids sec d'oxydes métalliques. La personne du métier pourra par exemple suivre les indications des normes NF EN 196-2 et NF EN 15309.

La brique en terre compressée 51 selon l'invention sera de façon préférée une brique pleine. Elle pourra présenter des évidements ou des réservations horizontales pour la réalisation des chaînages horizontaux. Classiquement une brique en terre compressée 51 selon la présente invention présentera une largeur d'au moins 5 cm, une hauteur d'au moins 2 cm et une longueur d'au moins 10 cm. La brique en terre compressée 51 pourra également présenter une longueur d'au plus 40 cm, de façon préférée d'au plus 35 cm, de façon plus préférée d'au plus 32 cm. La brique en terre compressée 51 pourra également présenter une hauteur d'au plus 17 cm, de façon préférée d'au plus 15 cm, de façon plus préférée d'au plus 10 cm. Par exemple, la brique en terre compressée 51 pourra prendre une forme de sensiblement $5{,}4 \times 10{,}5 \times 22$ cm ; $95 \times 150 \times 315$ mm ; $95 \times 100 \times 315$ mm ; $90 \times 140 \times 295$ mm ; $95 \times 220 \times 220$ mm ou encore $5 \times 10 \times 22$ cm (hauteur $\times$ largeur $\times$ longueur).

Ainsi, la brique en terre compressée 51 pourra être utilisée pour réaliser des murs extérieurs.

Ainsi, selon **un autre aspect**, l'invention porte sur **un système de fabrication 1 de briques de terre compressée** 51 (BTC).

Le système de fabrication 1 de BTC selon la présente invention sera de préférence au moins en partie automatisé. En effet, à partir de valeurs de pesée mesurées notamment par les premiers moyens de pesage 21, les processeurs pourront stopper des transporteurs et initier un transfert de matière vers un organe de mélange 50 tel un malaxeur.

Le système de fabrication 1 de BTC selon la présente invention pourra être un système stationnaire ou un système mobile.

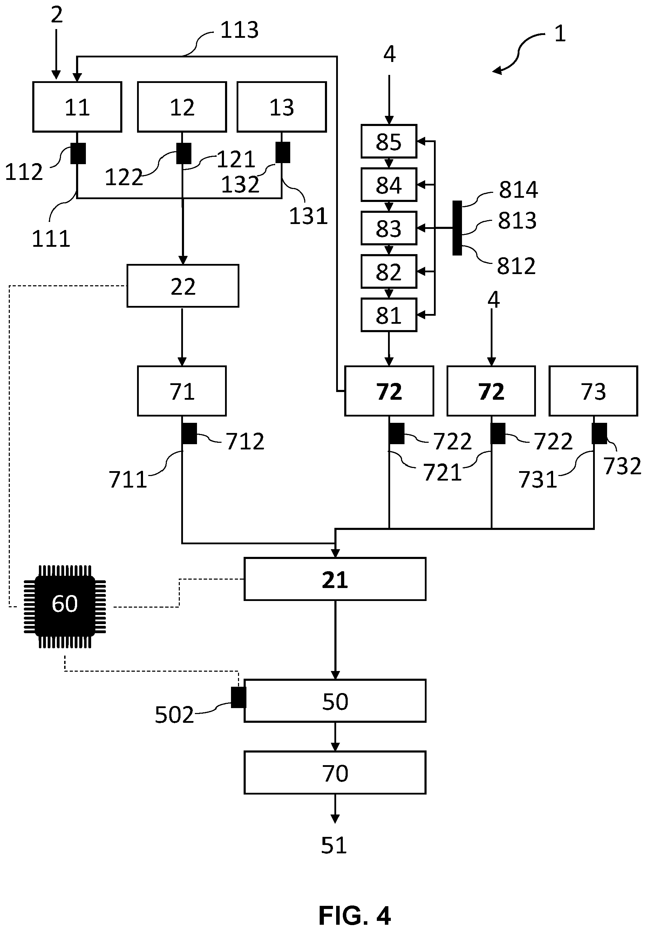

Comme illustrée à **la figure 4**, un système de fabrication 1 de BTC selon la présente invention comporte au moins un premier moyen de pesage 21, et éventuellement un ou plusieurs second(s) moyen(s) de pesage 22, distinct(s) du premier moyen de pesage ; et il peut en outre comporter un moyen de dosage volumétrique 23.

Un système de fabrication 1 de BTC selon la présente invention comportera comporter au moins deux ensembles de stockage 72 pour terre crue. Ces ensembles de stockage 72 pour terre crue qui peuvent par exemple prendre la forme d'une trémie à granulats, d'un silo ou simplement d'une zone au sol de stockage.

En outre, un système de fabrication 1 de BTC pourra comporter plusieurs silos destinés à accueillir les matières premières nécessaires à la confection des BTC 51. En particulier, un système de fabrication 1 de BTC pourra comporter un silo d'argile crue 11 destiné à accueillir une matrice argileuse crue, un silo d'activateur 12 destiné à accueillir une composition d'activation, et un silo d'oxydes métalliques 13 destiné à accueillir une composition d'oxydes métalliques calcinée. Alternativement ou en complément, le système de fabrication 1 de BTC pourra comporter un silo de liant 71 destiné à accueillir un liant pour briques de terre compressées 51. Le système de fabrication 1 de BTC pourra comporter aussi plusieurs trémies à granulats 73, un réservoir d'eau, un ou plusieurs réservoirs à adjuvants et un organe de mélange 50 tel un malaxeur.

En outre, un système de fabrication 1 de BTC sera avantageusement agencée de façon à être au moins en partie commandée par un ou plusieurs processeurs 60. Ces processeurs 60 sont configurés pour contrôler au moins une partie des transporteurs 111, 121, 131, 711, 721, 731 du système de fabrication 1 de BTC en fonction de valeurs générées par les un ou plusieurs moyen(s) de pesage et/ou de valeurs caractéristiques des matières premières utilisées.

Avantageusement, comme cela est présenté à la **figure 4**, un système de fabrication 1 de BTC selon la présente invention pourra comporter des éléments de préparation de la terre crue ou de la matrice argileuse crue. Ces éléments de préparation pourront notamment comporter un démotteur 85, un sécheur 84, un crible 83, un broyeur 82 et/ou un conteneur tampon 81. Dans de telles conditions, l'invention présente en outre l'avantage de concentrer les opérations sur le site de fabrication des BTC, au plus proche de sa future utilisation.

## Éléments de préparation de la terre crue 4

Dans la suite de la présente description, la solution développée par la demanderesse sera principalement basée sur l'utilisation d'une terre crue préparée qui aura subi un ou plusieurs traitements permettant d'améliorer sa réactivité. En outre, cela peut concerner la préparation de la matrice argileuse crue. En effet, dans certains cas, la matrice argileuse crue sera apportée au système de fabrication 1 de BTC sous la forme de terre crue 4 pré-traitée. Comme illustré à la figure 4, en sortie de zone de stockage 2, la terre crue 4 traitée peut être amenée par un transporteur 113 vers le silo d'argile crue 11.

Comme illustré à la figure 4, une terre crue 4 pourra être intégrée à l'entrée du système de fabrication 1 de BTC selon la présente invention. La terre crue 4 pourra être analysée avant de subir les traitements adaptés. Par exemple, un système de fabrication 1 de BTC pourra comporter un capteur d'humidité 812, un spectromètre à fluorescence X 813 et/ou un granulomètre laser en ligne 814.

Une terre crue 4 pourra être traitée dans un démotteur 85 de façon à casser les mottes.

La terre crue 4 pourra également être séchée dans un sécheur 84. Le sécheur pourra notamment permettre une réduction du taux d'humidité de la terre argileuse sans réaliser de montée en température de la terre argileuse excavée supérieure à 500°C. Le sécheur 84 sera par exemple un sécheur rotatif.

La terre crue 4 séchée pourra avantageusement subir une étape de criblage au sein d'un crible 83. Le crible 83 sera de préférence configuré pour éliminer les granulats présentant un diamètre supérieur ou égal à 2 cm. Le crible 83 sera par exemple un crible rotatif.

La terre crue 4 pourra avantageusement être broyée dans un broyeur 82. Le broyeur 82 pourra par exemple être un broyeur à marteaux, un broyeur à boulets ou encore un broyeur à barres.

En outre, un système de fabrication 1 de BTC selon la présente invention peut comporter un dispositif de capture magnétique permettant d'isoler des éléments métalliques présents dans la terre argileuse. Le dispositif de capture magnétique pourra être un dispositif de capture électromagnétique de type aimants ou électroaimants.

En outre, le système de fabrication 1 de BTC selon la présente invention pourra comporter des moyens de caractérisation de la terre crue préparée avec par exemple la mesure d'une distribution de taille de particule. Ces moyens permettront de préférence de mesurer :

- la quantité massique de sable dans la terre crue,
- la quantité massique de limons dans la terre crue,
- la quantité massique de granulat dans la terre crue ; et
- la quantité d'argile crue dans la terre crue.

Ces moyens de mesure peuvent être des moyens de mesure en continu ou ponctuels.

Avantageusement une ou plusieurs de ces valeurs seront traitées par le ou les processeurs 60 pour la génération des instructions de commandes du système de fabrication 1 de BTC.

Ainsi, par exemple, les transporteurs à granulats 731 seront contrôlés de façon à ce que le sable et les granulats contenus dans des trémies à granulat (par exemple venus de carrières) ne servent que de correctif. En effet, les quantités de sable et de granulat déjà présentes dans les terres crues 4 prétraitées ainsi que dans la matrice argileuse crue utilisée pour le liant pourront être prises en compte.

## Les silos du système de fabrication 1 de BTC

Généralement, les silos contiennent des matières pulvérulentes tandis que les granulats sont dans des trémies verticales ou horizontales.

Dans le cadre de la présente invention, un système de fabrication 1 de BTC pourra comporter au moins trois silos : un silo d'argile crue 11, un silo d'activateur 12, et un silo d'oxydes métalliques 13.

Avantageusement, un système de fabrication 1 de BTC pourra comporter plusieurs silos d'argile crue, d'activateur, et d'oxydes métalliques. En particulier, outre un silo d'argile crue 11, elle pourra comporter : un silo à ciment (e.g. ciment Portland), un silo de laitiers de hauts fourneaux, un silo de cendres volantes, un silo de métakaolin, un silo de métaillite et un silo de filler calcaire.

Le transport des matières stockées dans les silos se fait de préférence par des dispositifs de transports adaptés aux matières pulvérulentes tels que des vis sans fin.

## Le silo d'argile crue 11

Un silo d'argile crue 11 sera de préférence destiné à accueillir une matrice argileuse crue 2. Ainsi, dans le cadre de la présente invention un système de fabrication 1 de BTC selon la présente invention peut comporter un silo d'argile crue 11 contenant une matrice argileuse crue 2.

En particulier, le silo d'argile crue 11 est un silo adapté aux matières pulvérulentes. Comme cela a été mentionné, une matrice argileuse crue 2 pourra avoir été préparée au niveau du système de fabrication 1 de BTC selon la présente invention à partir d'une terre argileuse telle qu'une terre argileuse excavée. Alternativement, une matrice argileuse crue 2 peut être livrée après sa préparation sur un autre site.

Comme illustré à la figure 4, un silo d'argile crue 11 pourra être couplé aux un ou plusieurs second(s) moyen(s) de pesage 22 par un transporteur d'argile crue 111.

De préférence, le transporteur d'argile crue 111 est un transporteur adapté au transport de matière pulvérulente ; de préférence, le transporteur d'argile crue 111 est sélectionné parmi : une vis sans fin, une bande de convoyage ou tout moyen équivalent.

Le système de fabrication 1 de BTC peut comporter, en amont du silo d'argile crue 11, un capteur d'humidité 112 configuré pour mesurer une valeur de taux d'humidité de la matrice argileuse crue 2, de préférence de la matrice argileuse crue destinée à être ajoutée au silo d'argile crue 11. Un capteur d'humidité pourra par exemple prendre la forme d'une ou de plusieurs sondes micro-ondes.

Le système de fabrication 1 de BTC peut comporter, en amont du silo d'argile crue 11, un spectromètre à fluorescence X configuré pour mesurer la qualité et l'homogénéité de la matrice argileuse crue 2, de préférence de la matrice argileuse crue destinée à être ajoutée au silo d'argile crue 11.

Le système de fabrication 1 de BTC peut comporter, en amont du silo d'argile crue 11, un granulomètre laser en ligne 114 configuré pour mesurer des valeurs de granulométrie de la matrice argileuse crue 2, de préférence de la matrice argileuse crue 2 destinée à être ajoutée au silo d'argile crue 11.

Les capteurs positionnés en amont du silo d'argile crue 11 sont de préférence intégrés à un conteneur tampon 81 destiné à établir une interface entre des camions bananes et le silo à argile crue.

Les valeurs générées par les capteurs positionnés en amont du silo d'argile crue 11 peuvent être utilisées pour générer une empreinte numérique de la matrice argileuse crue 2 livrée.

Le système de fabrication 1 de BTC peut comporter en outre un capteur d'humidité agencé pour mesurer une valeur de taux d'humidité de la matrice argileuse crue 2 transportée au second moyen de pesage 22. Le ou les processeurs 60 peuvent alors être configurés pour prendre en compte la valeur de taux d'humidité de la matrice argileuse crue transportée pour contrôler au moins un des transporteurs 111, 121, 131, de préférence le transporteur d'argile crue 111.

### Le silo d'activateur 12

Un silo d'activateur 12 sera de préférence destiné à accueillir une composition d'activation. Ainsi, dans le cadre de la présente invention un système de fabrication 1 de BTC selon la présente invention peut comporter un silo d'activateur 12 contenant une composition d'activation. En particulier, le silo d'activateur 12 est un silo adapté aux matières pulvérulentes. Comme cela a été mentionné, la composition d'activation 12 pourra prendre la forme d'une poudre.

Comme illustré à la figure 4, un silo d'activateur 12 pourra être couplé aux un ou plusieurs second(s) moyen(s) de pesage par un transporteur d'activateur 121.

De préférence, le transporteur d'activateur 121 est un transporteur adapté au transport de matière pulvérulente ; de préférence, le transporteur d'activateur 121 est sélectionné parmi : une vis sans fin ou une bande de convoyage ou tout moyen équivalent.

Le système de fabrication 1 de BTC peut comporter un capteur d'humidité 122 configuré pour mesurer une valeur de taux d'humidité de la composition d'activation. Ce capteur d'humidité 122 peut par exemple être positionné en amont du silo d'activateur 12, pour de préférence mesurer l'humidité de la composition d'activation destinée à être ajoutée au silo d'activateur 12. Alternativement ou en complément, le système de fabrication 1 de BTC peut comporter, au niveau du silo d'activateur 12 ou en aval du silo d'activateur 12, un capteur d'humidité 122 configuré pour mesurer une valeur de taux d'humidité de la composition d'activation. Le capteur d'humidité 122 peut par exemple être positionné au niveau du transporteur d'activateur 121 ou au niveau du ou des seconds moyens de pesage 22.

### Le silo d'oxydes métalliques 13

Un silo d'oxydes métalliques 13 sera de préférence destiné à accueillir une composition d'oxydes métalliques calcinée. Ainsi, dans le cadre de la présente invention un système de fabrication 1 de BTC selon la présente invention peut comporter un silo d'oxydes métalliques 13 contenant une composition d'oxydes métalliques calcinée.

En particulier, le silo d'oxydes métalliques 13 est un silo adapté aux matières pulvérulentes. La composition d'oxydes métalliques calcinée pourra prendre la forme d'une poudre.

Comme illustré à la figure 4, un silo d'oxydes métalliques 13 pourra être couplé aux un ou plusieurs second(s) moyen(s) de pesage 22 par un transporteur d'oxydes métalliques 131.

De préférence, le transporteur d'oxydes métalliques 131 est un transporteur adapté au transport de matière pulvérulente ; de préférence, le transporteur d'oxydes métalliques 131 est sélectionné parmi : une vis sans fin ou une bande de convoyage ou tout moyen équivalent.

Le système de fabrication 1 de BTC peut comporter un capteur d'humidité 132 configuré pour mesurer une valeur de taux d'humidité de la composition d'oxydes métalliques calcinée. Ce capteur d'humidité 132 peut par exemple être positionné en amont du silo d'oxydes métalliques 13, pour de préférence mesurer l'humidité de la composition d'oxydes métalliques calcinée destinée à être ajoutée au silo d'oxydes métalliques 13. Alternativement ou en complément, le système de fabrication 1 de BTC peut comporter, au niveau du silo d'oxydes métalliques 13 ou en aval du silo d'oxydes métalliques 13, un capteur d'humidité 132 configuré pour mesurer une valeur de taux d'humidité de la composition d'oxydes métalliques calcinée. Le capteur d'humidité 132 peut par exemple être positionné au niveau du transporteur d'oxydes métalliques 131 ou au niveau du ou des seconds moyens de pesage 22.

### Trémie(s) à granulats 73

Un système de fabrication 1 de BTC selon la présente invention pourra comporter une ou plusieurs trémies à granulats 73. Le sable et les graviers sont acheminés par camion, train ou bateau depuis des carrières. Généralement, à leur arrivée, ils sont stockés temporairement dans une zone de stockage primaire avant d'être transportés, par exemple via un engin de chantier ou un tapis, dans une trémie à granulats 73.

Une trémie à granulats 73 pourra être une trémie horizontale ou une trémie verticale. Une trémie à granulats 73 sera agencée de façon à pouvoir stocker du sable ou des gravillons.

Classiquement les granulats pourront correspondre à des granulats naturels, des granulats artificiels ou encore des granulats recyclés.

Les granulats pourront en outre comporter des granulats minéraux, c'est-à-dire principalement constitués de matière minérale et/ou des granulats végétaux, c'est-à-dire principalement constitués de matière d'origine végétale. Les granulats pourront aussi comporter des granulats marins, c'est-à-dire principalement constitués de matière organique ou inorganique provenant des fonds marins tels que des granulats siliceux et des substances calcaires (e.g. maërl et sables coquilliers).

Les granulats minéraux pourront par exemple correspondent à du sable, des gravillons, des graviers, des fillers (ou matériaux fins), des poudres, déchets fossilisés et à leur combinaison.

Les granulats végétaux pourront par exemple correspondre à du bois (copeaux ou fibres), du chanvre, de la paille, de la chènevotte de chanvre, du miscanthus, du tournesol, du typha, du maïs, du lin, des balles de riz, des balles de blé, du colza, des algues, du bambou, la ouate de cellulose, du tissu défibré et à leur combinaison.

Comme illustré à la figure 4, une ou plusieurs trémies à granulats 73 sont couplées au premier moyen de pesage 21 par un ou plusieurs transporteurs à granulats 731.

Le transporteur à granulats pourra être de tout type susceptible de déplacer des granulats. De façon préférée, un transporteur à granulats 731 pourra prendre la forme d'un tapis, ou d'une bande de convoyage.

Le système de fabrication 1 de BTC peut comporter un capteur d'humidité 732 configuré pour mesurer une valeur de taux d'humidité de granulats. Ce capteur d'humidité 732 peut par exemple être positionné en amont d'une trémie à granulats 73, pour de préférence mesurer l'humidité des granulats destinés à être ajoutés à la trémie à granulats 73. Alternativement ou en complément, le système de fabrication 1 de BTC peut comporter, au niveau de la trémie à granulats 73 ou en aval de la trémie à granulats 73, un capteur d'humidité 732 configuré pour mesurer une valeur de taux d'humidité des granulats. Le capteur d'humidité 732 peut par exemple être positionné au niveau du transporteur de granulat 731 ou au niveau du premier moyen de pesage 21.

Bien que l'effet soit moins fort que pour l'argile crue, une différence d'humidité entre les granulats peut entrainer une différence de ratio entre granulats ou entre les granulats et les autres constituants du béton d'argile crue. Une telle différence peut avoir un impact sur la qualité du béton d'argile crue produit.

Avec une mesure de l'humidité des granulats et donc de la teneur en eau de ces granulats, il est possible de configurer le ou les processeurs 60 de façon à ce qu'il commande le système de fabrication 1 de BTC de telle manière à ce que cette teneur en eau soit compensée.

## Moyens de pesage

Comme cela a été mentionné, un système de fabrication 1 de BTC selon la présente invention dispose d'au moins un premier moyen de pesage 21 et éventuellement d'un ou plusieurs seconds moyens de pesage 22.

Ces moyens de pesage 21, 22 présente avantageusement des gammes de mesure et des précisions différentes et adaptées aux matières qu'ils sont agencés pour peser.

En particulier, le premier moyen de pesage 21 peut présenter une précision de mesure de 2 kg ou plus, de préférence 4 kg ou plus. En outre, le premier moyen de pesage 21 peut présenter une capacité d'au moins 400 kg, de préférence d'au moins 600 kg de granulats. Par exemple, un premier moyen de pesage 21 présentera une capacité d'au moins 1 m$^3$, de préférence d'au moins 1,5 m$^3$.

Le ou les premiers moyens de pesage 21 sont dédiés au pesage de la terre crue 4, du liant déjà assemblé et éventuellement des granulats. Ils peuvent par exemple prendre la forme de tapis peseur ou de balance à bascule.

Dans un mode de réalisation, un système de fabrication 1 de BTC selon la présente invention comporte un tapis d'amené agencé pour transporter les granulats, une fois pesés, jusqu'au organe de mélange 50 tel un malaxeur.

En particulier, les uns ou plusieurs second(s) moyen(s) de pesage 22 présentent une précision de mesure de 1 kg ou moins, de préférence de 0,5 kg ou moins. Cela est particulièrement important dans le cadre de la présente invention pour obtenir un liant pour BTC présentant de bonnes performances. En outre, un second moyen de pesage 22 peut présenter une capacité d'au plus 2000 kg, de préférence d'au plus 1000 kg de façon plus préférée d'au plus 500 kg. Par exemple, un second moyen de pesage 22 présentera une capacité d'au plus 2 m$^3$, de préférence d'au plus 0,5 m$^3$, de façon plus préférée d'au plus 0,3 m$^3$.

En particulier, un système de fabrication 1 de BTC selon la présente invention pourra être configuré pour ne comporter qu'un seul second moyen de pesage 22 couplé au transporteur d'argile crue 111, au transporteur d'activateur 121 et au transporteur d'oxydes métalliques 131.

## Réservoir à adjuvant

Un système de fabrication 1 de BTC selon la présente invention pourra comporter un ou plusieurs réservoirs à adjuvant.

### Réservoir d'eau

Un système de fabrication 1 de BTC pourra classiquement comporter un réservoir d'eau. Le réservoir pourra être agencé pour comporter de l'eau de réseau (potable), mais aussi une eau naturelle de préférence décantée ou une eau chargée.

### Un **malaxeur**

Un système de fabrication 1 de BTC pourra classiquement comporter un organe de mélange 50 tel un malaxeur. L'organe de mélange sera appelé ci-après un malaxeur 50.

Le malaxeur 50 d'un système de fabrication 1 de BTC selon la présente invention pourra être de tous types permettant un malaxage des matières premières à la base du béton d'argile crue. La cuve pourra être de forme annulaire, cylindrique, ou en tambour et le malaxage pourra impliquer des pales mais aussi un tourbillon, un mouvement épicycloïdal, ou une hélice spire.

En particulier, un système de fabrication 1 de BTC selon la présente invention comportera un moyen de mesure 502 d'une valeur de couple de malaxage du malaxeur 50. Cette valeur peut être mesurée de préférence en continu, par exemple via la mesure de la puissance électrique consommée par le malaxeur 50.

En outre, certains couples peuvent être plus adaptés à un malaxage efficace d'un béton d'argile crue. De préférence, le ou les processeurs 60 sont en outre configurés pour adapter ou commander le transport d'un ou de plusieurs adjuvants au malaxeur en fonction de la valeur de couple de malaxage mesurée, en particulier en fonction de la puissance électrique consommée par le malaxeur 50.

En outre, un malaxeur 50 pourra comporter un capteur pour la mesure de l'humidité du mélange malaxé - par exemple une sonde micro-ondes placée dans le malaxeur 50 - pour permettre un ajout d'eau en conséquence. Ce capteur d'humidité ou plus largement les capteurs d'humidité utilisés dans le cadre du présent système de fabrication 1 de BTC pourront correspondre à une sonde micro-ondes, un dispositif d'analyse thermogravimétrique ou encore un système comportant un four et une balance.

### Un moyen de mise en forme des briques de terre compressées

Un système de fabrication 1 de BTC pourra classiquement comporter un moyen de mise en forme 70 des briques de terre compressées 51.

Le moyen de mise en forme 70 des briques de terre compressées 51 pourra être de tous types permettant une mise en forme de brique du mélange préalablement formé. Il peut comporter un ou plusieurs moules ainsi qu'un ou plusieurs moyens de pression permettant d'appliquer une pression sur le mélange.

### Moyens d'analyse des matières premières

Comme cela a été mentionné, un système de fabrication 1 de BTC selon la présente invention permet de former des BTC présentant des propriétés avantageusement de résistance mécanique à la compression, éventuellement de MBV et cela avec une cure de durée réduite. Cela nécessite un assemblage précis des matières premières utilisées. Ainsi, un système de fabrication 1 de BTC selon la présente invention comporte avantageusement des moyens 712, 722 d'analyse et de caractérisation des matières premières utilisées qui pourront de préférence être positionnés au niveau des moyens de transport.

Un système de fabrication 1 de BTC selon la présente invention pourra comporter, de préférence au niveau des moyens de transport, des capteurs optiques capables d'analyser la forme et/ou la couleur des matières premières. Un système de fabrication 1 de BTC peut alors comporter un trieur (mécanique, jet d'air...) commandé par un processeur 60 et capable d'éliminer des éléments indésirables détectés par le capteur optique. Alternativement ou en complément, le ou les processeurs 60 pourront être configurés pour apporter une quantité plus ou moins importante de matière première au malaxeur 50 en fonction d'une valeur de caractéristique calculée.

Un système de fabrication 1 de BTC selon la présente invention pourra comporter, de préférence au niveau des moyens de transport, un scanner à rayons X capable de générer une image radiographique. À partir de cette image radiographique ou de plusieurs images radiographiques des processeurs 60 pourront être configurés pour calculer une densité. Un système de fabrication 1 de BTC peut alors comporter un trieur (mécanique, jet d'air...) commandé par un processeur 60 et capable d'éliminer des éléments indésirables en fonction de leur densité calculée. Alternativement ou en complément, le ou les processeurs 60 pourront être configurés pour apporter une quantité plus ou moins importante de matière première au malaxeur 50 en fonction de la valeur de densité calculée.

Un système de fabrication 1 de BTC selon la présente invention pourra comporter, de préférence au niveau des moyens de transport, un ou plusieurs spectromètres. Ces spectromètres pourront être chacun configurés pour générer des spectres pour différentes longueurs d'ondes telles que des spectres infrarouges, spectres proches infrarouges, spectre de Raman, spectre XPS (spectrométrie photoélectronique X), spectre de fluorescence des rayons X classique ou en réflexion totale. À partir de ce ou ces spectres, un ou plusieurs processeurs 60 pourront être configurés pour calculer une valeur de caractéristique d'une matière première. Le système de fabrication 1 de BTC peut notamment comporter un trieur (mécanique, jet d'air...) commandé par un processeur 60 et capable d'éliminer des éléments indésirables en fonction de la valeur de caractéristique calculée. Alternativement ou en complément, le ou les processeurs 60 pourront être configurés pour apporter une quantité plus ou moins importante de matière première au malaxeur 50 en fonction de la valeur de caractéristique calculée.

Un système de fabrication 1 de BTC selon la présente invention pourra comporter, de préférence au niveau des moyens de transport, un ou plusieurs compteurs Geiger et un ou plusieurs magnétomètres pour déterminer le comportement sous sollicitation d'un champ magnétique. Le ou les processeurs 60 pourront être configurés pour apporter une quantité plus ou moins importante de matière première au malaxeur 50 en fonction de valeurs ainsi générées.

### Le ou les processeurs

Comme cela a été mentionné, le système de fabrication 1 de BTC selon la présente invention peut être avantageusement agencée de façon à être au moins en partie commandée par un ou plusieurs processeurs 60. En particulier, un système de fabrication 1 de BTC selon l'invention pourra comporter un automate central contrôlé à partir d'une armoire de commande dédiée.

De préférence, les processeurs 60 sont configurés pour contrôler les transporteurs 111, 121, 131, 711, 721, 731 en fonction de valeurs générées par les un ou plusieurs moyen(s) de pesage 21,22.

Les inventeurs ont identifié une importance de la quantité massique d'oxydes métalliques dans le cadre de la préparation de BTC. De façon préférée, les processeurs 60 seront configurés pour commander le système de fabrication 1 de BTC de façon à ce qu'une gâchée comporte, au moins 5 % en poids sec d'oxydes métalliques, de façon plus préférée au moins 7% en poids, de façon encore plus préférée au moins 10% en poids. En particulier, de façon avantageuse, une gâchée comportera au moins 3 % en poids d'au moins un oxyde métallique correspondant à l'oxyde d'un métal présentant au moins deux électrons de valence. De façon préférée, les au moins 3 % en poids peuvent être formé à partir de plusieurs oxydes métalliques différents. Ces oxydes métalliques pourront provenir de plusieurs sources. De façon préférée, les oxydes métalliques formés avec un métal présentant au moins deux électrons de valence seront contenus dans la composition d'activation et/ou dans la composition d'oxydes métalliques calcinée. De façon préférée, une gâchée comporte au moins 3 % en poids d'au moins un oxyde métallique correspondant à l'oxyde d'un métal présentant au moins deux électrons de valence, de façon plus préférée au moins 4 % en poids. De façon encore plus préférée, l'au moins un oxyde métallique présentant au moins deux électrons de valence est sélectionné parmi les oxydes d'aluminium ou les oxydes de magnésium.

En outre, le ou les processeurs 60 pourront être configurés pour mettre en oeuvre les différents modes de réalisation, préférés ou non, décrits en lien avec le procédé de fabrication selon l'invention.

Le ou les processeurs 60 peuvent être configurés pour prendre en compte la valeur de taux d'humidité de la matrice argileuse crue et/ou de la terre crue, de préférence de la matrice argileuse crue pesée et/ou de la terre crue pesée, pour contrôler au moins un des transporteurs 111, 121, 131, 301, 721 de préférence le transporteur d'argile crue 111 ou le transporteur de terre crue 721. Ainsi, en fonction de l'humidité mesurée, les processeurs 60 pourront commander le système de fabrication 1 de BTC de façon qu'une quantité adéquate d'eau soit ajoutée au malaxeur.

L'utilisation d'une combinaison de terre crues présentant des profils granulométriques différents en combinaison avec un liant formé à partir d'une matrice argileuse crue n'avait jusqu'à récemment pas été considérée comme possible. Une telle utilisation en particulier dans un système de fabrication 1 de BTC, peut bénéficier de l'exploitation de valeurs de caractéristiques des terres crues et de la matrice argileuse crue telles que des valeurs de granulométrie de la matrice argileuse crue 2 ou des terres crues 4, ou encore de fluorescence X. Avantageusement, le ou les processeurs 60 peuvent être configurés pour prendre en compte une valeur de granulométrie de la matrice argileuse crue et/ou des terres crues et/ou une valeur de fluorescence X pour contrôler au moins un des transporteurs 111, 121, 131, 301, 721 de préférence le transporteur de terres crues 721 et/ou le transporteur d'argile crue 111. Ainsi, la combinaison de terres est adaptée par les processeurs 60 en fonction de valeurs mesurées sur la matrice argileuse crue 2 et les terres crues 4.

De façon préférée, le ou les processeurs 60 du système de fabrication 1 de BTC selon la présente invention sont en outre configurés pour adapter ou commander le transport d'un ou de plusieurs adjuvants au malaxeur 50 en fonction des valeurs de fluorescence X mesurées des terres crues 4.

De façon plus préférée, le ou les processeurs 60 pourront être configurés pour calculer un indice d'activité de la terre crue à partir notamment de valeurs de fluorescence X mesurées de la terre crue 4. En outre, le ou les processeurs 60 d'un système de fabrication 1 de BTC selon la présente invention peuvent être configurés pour adapter le transport d'un ou de plusieurs adjuvants au malaxeur 50 en fonction de l'indice d'activité de la terre crue 4 calculé. De façon encore plus préférée, le calcul de l'indice d'activité de la terre crue 4 comporte l'utilisation des valeurs de granulométrie et de fluorescence X mesurées dans le système de fabrication 1 de BTC.

Comme cela a été mentionné les terres crues 4 peuvent présenter une fluctuation importante de leurs caractéristiques et cela peut avoir un impact important sur les performances des BTC fabriquées. Dans ces conditions, le système de fabrication 1 de BTC selon la présente invention est avantageusement agencée pour permettre un contrôle en continu de la conformité des matières premières utilisées.

Ainsi, le ou les processeurs 60 peuvent être configurés pour comparer les valeurs de caractéristiques des terres crues 4 (e.g. granulométrie et de fluorescence X) mesurées à des seuils prédéterminés. Lorsque les valeurs ne sont pas conformes aux seuils prédéterminés alors une alerte peut être générée.

En outre, ces valeurs mesurées pourront être associées à une gâchée de BTC. De façon préférée, ces valeurs mesurées sont chiffrées avant d'être associées à une gâchée de BTC. Ainsi, les valeurs peuvent rester confidentielles tout en étant accessibles en cas de besoin.

En outre, les valeurs mesurées de caractéristiques de terres crues 4, chiffrées ou non, les paramètres de production d'une gâchée de BTC et un identifiant de ladite gâchée concernée pourront faire l'objet d'un enregistrement. L'enregistrement pourra comporter une sécurisation des données pour en éviter la falsification (e.g. utilisation de certificat ou de tiers de confiance).

Ainsi, une dérive de la qualité de la matière première utilisée entrainant des non-conformités sur les bétons générés pourra être rapidement identifiée et corrigée.

Selon un autre aspect, la présente invention porte sur un procédé de commande d'un système de fabrication 1 de BTC.

En effet, un système de fabrication 1 de BTC selon la présente invention est de préférence conçue pour fonctionner d'une manière au moins partiellement automatique. Un procédé de commande selon la présente invention pourra comporter comme étapes les différents modes de réalisation et notamment les configurations des processeurs 60 du système de fabrication 1 de BTC selon la présente invention.

Le procédé de commande selon la présente invention pourra par exemple comporter des étapes de :

- Contrôle d'un acheminement des matériaux, par exemple à partir d'une valeur de pesage par les moyens de pesage 21,22 ;
- Mesure et si nécessaire correction de l'humidité du mélange produit dans le malaxeur 50 ; et
- Contrôle du malaxage du mélange.

Le liant pour BTC pourra être la première matière à être ajoutée au malaxeur 50.

Une fois qu'une quantité adéquate de liant a été homogénéisé dans le malaxeur 50, la terre crue 4 broyée pourra être ajoutée au liant, puis la seconde terre crue 4 présentant un profil granulométrique différent du profil granulométrique de la terre crue 4 broyée pourra être ajoutée.

Avantageusement, les quantités ajoutées pourront prendre en compte la quantité de liant ajouté mais également des valeurs de caractéristiques des terres crues 4 broyées ou non. Les valeurs caractéristiques des terres crues 4 pourront correspondre à un taux d'humidité, des valeurs de fluorescence X, ou encore une valeur de granulométrie.

Une fois une gâchée pour BTC fabriquée, celle-ci est utilisée par un moyen de mise en forme 70 de brique pour produire les BTC.

Selon un autre aspect, l'invention porte sur un programme d'ordinateur comprenant des instructions de code de programme pour l'exécution des étapes d'un procédé selon l'invention lorsque ledit programme est exécuté sur un ordinateur.

**EXEMPLES**

**Préparation d'un mélange pour élément constructif** :

Les préparations comparatives sont préparées de façon conventionnelle.

La formulation selon l'invention est préparée en deux étapes. Un prémélange à sec du liant pour briques en terre compressée est réalisé entre une matrice argileuse crue et une composition d'activation, avec éventuellement une composition d'oxydes métalliques calcinée et un défloculant. Dans un exemple particulier, le liant pour brique de terre compressée comporte 60% en poids de matrice argileuse crue, 40% en poids de composition d'activation.

La terre est extraite, caractérisée (granulométrie, tests Atterberg...), criblée et tamisée à 10 mm. La terre crue fait avantageusement l'objet d'au moins un broyage de façon à générer une terre crue broyée. La terre crue broyée et une terre crue présentant un profil granulométrique différent (broyée ou non) sont ensuite acheminées jusqu'au malaxeur comportant le liant et mélangées avec le liant. Dans un exemple particulier, le mélange comporte 92 % en poids de terre(s) crue(s) et 8% en poids sec de liant par rapport au poids sec total de mélange.

De l'eau est ensuite pulvérisée jusqu'à obtenir le niveau d'hydratation attendu. Le niveau d'hydratation peut être de l'ordre de 5 à 15 %.

Une fois le mélange effectué, il est envoyé dans une presse hydraulique, un doseur pèse une quantité prédéterminée de mélange et le dépose dans le moule. Le mélange est compressé, démoulé puis la brique en terre compressée est laissée à maturation à température ambiante, c'est-à-dire environ 20 degrés Celsius pendant sept jours.

**Méthodologie de mesure des propriétés mécaniques des mélanges pour brique de terre compressée :**

Une fois la maturation terminée, la résistance mécanique est mesurée. On entend par résistance mécanique d'une brique en terre compressée, sa résistance à la compression, une telle compression étant mesurée selon la norme NF EN 771-3+A1/CN et est exprimée en Méga Pascal (MPa).

Comparaison des éléments constructifs selon l'invention aux éléments **constructifs connus** :

Le tableau 2 ci-dessous présente, pour différents types de briques de terre compressées, les propriétés obtenues.

[Tableau 2]

| | Brique de Référence non stabilisée | Brique de Référence A | Brique de Référence B | Brique de Référence B | BMTU01 |
|---|---|---|---|---|---|
| Liant (% en poids sec du mélange) | 0% | 8 % Chaux | 8 % de Ciment Portland | 3,2 % de Ciment Portland | 3,2 % de Ciment Portland 4,8% Matrice argileuse crue |
| Terre crue (% en poids sec du mélange) | 100% | 92 % terre crue non broyée | 92 % terre crue non broyée | 96.8 % terre crue non broyée | 41 %Terre crue Broyée, D50 < 500 $\mu$m 41 % Terre crue non broyée, D50 > 500 $\mu$m |
| Résistance à la compression à 5 jours | 0,1 MPa | 2,2 MPa | 3,8 MPa | 2,2 MPa | 3,6 MPa |
| Résistance à la compression à 10 jours | 0,2 MPa | 3,5 MPa | 4,1 MPa | 2,5 MPa | **4 MPa** |
| Résistance à la compression à 15 jours | 0,4M Pa | 3,8 MPa | 4,4 MPa | 3,2 MPa | 4,2 MPa |
| Résistance à la compression à 30 jours | 0,6M Pa | 3,9 MPa | 5,2 MPa | 3,7 MPa | 4,5 MPa |
| Réduction $CO_2$ par rapport à une brique formulée à partir d'un liant 100% ciment Portland | 99,5% | Jusqu'à 20% | 0% | Jusqu'à 60% | Jusqu'à 60% |
| Résistance à l'eau | NON | OUI | OUI | Faible | OUI |

Le tableau 2 ci-dessus illustre que la brique de terre compressée selon l'invention atteint un niveau acceptable de résistance en compression (Rc - > 4 MPa) plus rapidement qu'une brique de terre compressée comportant seulement de la terre crue ou seulement un mélange de terre crue et de chaux ou encore d'une brique de terre compressée comprenant une quantité équivalente de ciment Portland.

Ainsi, elle est plus rapidement utilisable et présente une empreinte carbone réduite par rapport à une BTC stabilisée classiquement avec des quantités importante de ciment Portland.

L'invention peut faire l'objet de nombreuses variantes et applications autres que celles décrites ci-dessus. En particulier, sauf indication contraire, les différentes caractéristiques structurelles et fonctionnelles de chacune des mises en oeuvre décrite ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente.

**Revendications**

1. Procédé de fabrication (200) d'une brique de terre compressée (51), ledit procédé comportant les étapes suivantes :

   - Formation (230) d'un liant comportant :

     ◦ une matrice argileuse crue (2), et
     ◦ une composition d'activation ;

   - Mélange (240) du liant avec au moins deux terres crues (4) présentant des profils granulométriques respectivement différents ; et
   - Mise en forme (250) d'une brique en terre compressée (51) à partir du mélange.

2. Procédé de fabrication (200) selon la revendication 1, **caractérisé en ce qu'**au moins une des deux terres crues est une terre crue broyée et **en ce que** la terre crue broyée utilisée lors de l'étape de mélange (240) présente une D50 inférieure à 500 $\mu$m, la D50 étant de préférence mesurée selon la norme ATSM D6913-04(2009).

3. Procédé de fabrication (200) selon l'une des revendications 1 ou 2, **caractérisé en ce qu'**au moins une des terres crues (4) utilisée lors de l'étape de mélange (240) présente une D50 supérieure à 500 $\mu$m, la D50 étant de préférence mesurée selon la norme ASTM D6913-04(2009).

4. Procédé de fabrication (200) selon l'une quelconque des revendications 1 à 3, **caractérisé en ce que** la composition d'activation est une composition alcaline comportant un ou plusieurs composés présentant un pKa supérieur ou égal à 10.

5. Procédé de fabrication (200) selon l'une quelconque des revendications 1 à 4, **caractérisé en ce que** lors de l'étape de mélange (240), le mélange comporte 5% ou moins en poids sec de ciment, en particulier de ciment Portland.

6. Procédé de fabrication (200) selon l'une quelconque des revendications 1 à 5, **caractérisé en ce que**, lors de l'étape de formation (230) du liant, la proportion massique en poids sec de matrice argileuse crue (2) dans le liant est d'au moins 30% en poids sec.

7. Procédé de fabrication (200) selon l'une quelconque des revendications 1 à 6, **caractérisé en ce que**, lors de l'étape de formation (230) du liant, la matrice argileuse crue (2) ajoutée présente une D50 inférieure à 400 $\mu$m, la D50 étant de préférence mesurée selon la norme ASTM D6913-04(2009).

8. Procédé de fabrication (200) selon l'une quelconque des revendications 1 à 7, **caractérisé en ce que** l'étape de formation (230) du liant comporte en outre l'ajout d'une composition d'oxydes métalliques calcinée, de préférence la proportion massique en poids sec de composition d'oxydes métalliques calcinée dans le liant est d'au plus 40%.

9. Procédé de fabrication (200) selon l'une quelconque des revendications 1 à 8, **caractérisé en ce que** l'étape de formation (230) du liant comporte en outre l'ajout d'un défloculant, de préférence la proportion massique en poids sec de défloculant dans le liant est d'au moins 0,01%.

10. Procédé de fabrication (200) selon l'une quelconque des revendications 1 à 9, **caractérisé en ce que**, lors de l'étape de mélange (240) du liant avec les terres crues, le liant représente au moins 3% en poids sec du mélange.

11. Procédé de fabrication (200) selon l'une quelconque des revendications 1 à 10, **caractérisé en ce qu'**il comporte une étape de réalisation d'une étape de cure (260) de la brique de terre compressée (51), l'étape de cure (260) est faite sur une durée d'au plus 15 jours, de préférence d'au plus 10 jours.

**12.** Procédé de fabrication (200) selon la revendication précédente, **caractérisé en ce que** la cure (260) est faite de façon à obtenir une brique de terre compressée (51) présentant une résistance à la compression supérieure ou égale à 4 MPa, selon la norme NF EN 771-3+A1/CN.

**13.** Procédé de fabrication (200) selon l'une quelconque des revendications 1 à 12, **caractérisé en ce qu'**il comporte une étape d'acquisition d'une valeur d'au moins une propriété granulométrique de la matrice argileuse crue (2) et des terres crues (4) et **en ce que** l'étape de mélange (240) du liant avec les terres crues (4) comporte un ajout de quantités calculées de terres crues (4), les quantités calculées de terres crues (4) étant calculées par un ou plusieurs processeurs (60) en fonction des valeurs d'au moins une propriété granulométrique préalablement acquises.

**14.** Brique de terre compressée (51) fabriquée par le procédé (200) selon l'une quelconque des revendications 1 à 13.

**15.** Brique de terre compressée (51) selon la revendication 14, **caractérisée en ce qu'**elle comporte au moins 5 % en poids sec d'argile crue et entre 0,5 et 4 % en poids sec de ciment, de préférence de ciment Portland.

**16.** Brique de terre compressée (51) selon l'une des revendications 14 ou 15, **caractérisée en ce qu'**elle comporte en outre un agent de défloculation.

**17.** Système (1) de fabrication (51), pour la mise en oeuvre du procédé de fabrication d'une brique de terre compressé selon l'une des revendications 1 à 13, comportant :

- Un premier dispositif de modification de distribution de taille de particules agencé pour recevoir une terre crue (4) présentant un premier profil de distribution de taille de particules et pour la traiter de façon à ce que la terre crue traitée présente un deuxième profil de distribution de taille de particules ;
- Un deuxième dispositif de modification de distribution de taille de particules agencé pour recevoir une partie de la terre crue présentant le deuxième profil de distribution de taille de particules et pour la traiter de façon à ce que la terre crue traitée présente un troisième profil de distribution de taille de particules ; et
- Un organe de mélange (50) configuré pour mélanger les terres crues présentant les deuxième et troisième profils de distribution de taille de particules avec un liant comportant une matrice argileuse crue (2) et une composition d'activation.

200

210 — Acquisition de valeurs de caractéristiques des terres crues

220 — Traitement de la matrice argileuse et/ou de la terre crue

230 — Formation d'un liant

240 — Mélange du liant avec au moins deux terres crues

250 — Mise en forme d'une brique en terre compressée

260 — Réalisation d'une cure

## FIG. 1

250

251 — Dépose du mélange dans un moule

252 — Application d'une pression sur au moins une surface du mélange moulé de façon à former une brique de terre compressée

253 — Retirer la brique de terre compressée du moule

## FIG. 2

FIG. 3

**FIG. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **KUMAR et al.** Effects of sugarcane bagasse fibers on the properties of compressed and stabilized earth blocks. *Construction and Building Materials,* 2022, vol. 315 (2022), 125552
- **AKINWUMI et al.** Marine plastic pollution and affordable housing challenge: Shredded waste plastic stabilized soil for producing compressed earth bricks. *Case Studies in Construction Materials,* 2019, vol. 11 (2019), e00241
- **MALKANTHI et al.** Lime stabilization for compressed stabilized earth blocks with reduced clay and silt. *Case Studies in Construction Materials,* 2020, vol. 12 (2020), e00326
- **MALKANTHI et al.** Use of construction waste to modify soil grading for compressed stabilized earth blocks (CSEB) production. *Case Studies in Construction Materials,* 2021, vol. 15 (2021), e00717
- **LAWANE.** Mechanical and physical properties of stabilised compressed coal bottom ash blocks with inclusion of lateritic soils in Niger. *Scientific African,* Novembre 2019, vol. 6, e00198